# FASCICULE DE BREVET EUROPEEN

(11) **EP 3 510 336 B1**
(45) Date de publication et mention de la délivrance du brevet: **17.03.2021**
(21) Numéro de dépôt: 17765223.7
(22) Date de dépôt: 04.08.2017
(51) Int. Cl.: F28F 9/00, B60K 11/04, F28D 21/00

(54) **ASSEMBLAGE POUR LE SUPPORT AVEC FILTRAGE DE VIBRATIONS D'UN ÉLÉMENT FONCTIONNEL SUR UN ÉLÉMENT STRUCTUREL DU CORPS D'UN ENGIN COMME UN APPAREIL OU UN VÉHICULE À MOTEUR**
ANORDNUNG ZUR UNTERSTÜTZUNG, MIT FILTRATION VON SCHWINGUNGEN, EINES FUNKTIONALEN ELEMENTS AUF EINEM STRUKTURELLEN ELEMENT DER KAROSSERIE EINES FAHRZEUGS, WIE ETWA EINES KRAFTFAHRZEUGS ODER EINER MOTORISIERTEN VORRICHTUNG
ASSEMBLY FOR SUPPORTING, WITH FILTRATION OF VIBRATIONS, A FUNCTIONAL ELEMENT ON A STRUCTURAL ELEMENT OF THE BODY OF A CRAFT, SUCH AS A MOTOR VEHICLE OR MOTORIZED APPARATUS

(30) Priorité: 07.09.2016 FR 1658311
(43) Date de publication de la demande: 17.07.2019
(73) Titulaire: SumiRiko SD France S.A.S., 58300 Decize (FR)
(72) Inventeur: SENNEPIN, Sébastien, 58390 Dornes (FR); RENARD, Franck, 58000 Saint Eloi (FR)
(74) Mandataire: Ernest Gutmann - Yves Plasseraud S.A.S.
(86) Numéro de dépôt international: PCT/FR2017/052201
(87) Numéro de publication internationale: WO 2018/046815

(56) Documents cités:
- EP-A2- 2 161 529
- WO-A1-2014/140478
- FR-A3- 2 944 769
- US-A1- 2007 137 845

## Description

L'invention concerne le domaine de l'assemblage pour - à l'état monté - le support avec filtrage de vibrations d'un élément fonctionnel - comme étant ou comprenant un ventilateur, un échangeur de chaleur, un condenseur - sur un élément structurel rigide du corps d'un engin - comme un appareil ou un véhicule à moteur -, qui comprend deux ensembles d'assemblage analogues, écartés l'un de l'autre le long de l'élément structurel et de la partie basse de l'élément fonctionnel.

Plus précisément, l'invention a pour objet un tel assemblage, une cassette d'appui et de filtrage de vibrations spécialement faisant partie d'un tel assemblage.

L'invention a également pour objet un insert de rehausse et une pièce de verrouillage faisant partie d'un tel assemblage.

Le document EP 2 161 529 décrit un élément support servant d'appui élastique d'au moins un échangeur de chaleur dans un véhicule automobile, comprenant un élément formant cadre et un élément d'appui élastique comportant une ouverture pour le logement d'un tourillon support disposé côté échangeur de chaleur, où l'élément d'appui élastique est assemblé avec l'élément formant cadre, par complémentarité de forme, dans la direction longitudinale du tourillon d'appui, où l'élément d'appui comprend un élément élastique en matériau élastomère, où l'élément d'appui comprend une enveloppe qui peut être insérée, par complémentarité de forme , dans l'élément formant cadre, où l'élément d'appui qui comprend un coussinet, l'enveloppe et l'élément élastique, est moulé par injection comme une pièce à deux composants. Dans la réalisation selon ce document, le coussinet et l'enveloppe, qui se composent d'une matière plastique dure, sont moulés par injection sur l'élément élastique. De plus, ce document ne montre pas deux ensembles d'assemblage analogues, comprenant chacun une paroi haute, un noyau central, des ailes et un élément fonctionnel, tel que revendiqué.

Un élément support selon le document EP 2 161 529 ne permet pas de réaliser un assemblage qui permette de rattraper des dispersions longitudinales substantielles.

Tel est le problème à la base de l'invention.

Le document US2007/137845 décrit un ensemble d'échangeur de chaleur comprenant un dispositif de transfert de chaleur, au moins un composant comprenant un matériau souple pour fournir une fonction d'étanchéité, et au moins un revêtement de surface sur au moins un composant, dans lequel le matériau flexible est pourvu d'un revêtement de surface.

Le document FR 2 953 774 décrit un assemblage de fixation d'un échangeur de chaleur de véhicule automobile, tel qu'un radiateur ou un refroidisseur d'air, dans lequel l'échangeur de chaleur est monté sur deux traverses inférieure et supérieure avec des moyens de fixation au moins en partie élastique pour réduire la transmission des vibrations, constitués de logements ménagés dans l'échangeur destinés à recevoir des plots portés par les traverses.

Le document FR 2 822 125 décrit un assemblage inverse avec un plot filtrant en élastomère souple naturel ou synthétique monté par emboîtement élastique dans un trou d'une traverse support en forme de plaque, par insertion de cette plaque dans une rainure périphérique du plot. Le plot est immobilisé par rapport à la plaque et comporte un trou central dans lequel est montée un pion de fixation solidaire du radiateur.

Le document US 2005/0284868 décrit un plot filtrant en caoutchouc monobloc, monté dans un trou d'insertion d'une traverse, comportant un trou de réception d'un pion saillant sous le radiateur qui repose par sa face inférieure sur la face supérieure du plot pourvu de saillies et de cavités. Le document US 5 651 839 décrit une structure analogue.

Le document US 5 758 860 décrit un support de radiateur capable d'absorber les déplacements verticaux par la déformation verticale d'un élément déformable en caoutchouc interposé entre un tube rigide intérieur et un tube rigide extérieur.

Contrairement aux documents précédents, les documents WO 2014/140478 et FR 2 944 769 posent le problème du rattrapage des dispersions longitudinales. On entend par là les écarts dimensionnels entre les parties devant être assemblées, du fait des tolérances de fabrication, dans la mesure où l'assemblage comprend deux ensembles d'assemblage analogues, écartés l'un de l'autre le long de l'élément structurel et de la partie basse de l'élément fonctionnel.

Le document WO 2014/140478 décrit un ensemble de refroidissement apte à être fixé à un élément d'une structure de caisse de véhicule automobile comportant des moyens de fixation inférieurs par basculement et des moyens de fixation supérieurs par encliquetage qui comportent des moyens de rattrapage des dispersions de fabrication selon les directions longitudinale, transversale et verticale.

Le document FR 2 944 769 décrit un élément élastique déformable d'appui et de filtrage de vibrations monobloc en matériau type caoutchouc ayant une partie centrale pourvue d'un alésage, une partie périphérique, et une liaison autorisant un déplacement élastique.

L'invention vise également à résoudre le problème du rattrapage des dispersions longitudinales en proposant un assemblage apte à rattraper des dispersions longitudinales substantielles, qui, en même temps soit aisé à assembler et dont les capacités de filtrage sont élevées.

Ci-après, un exposé de l'invention.

Selon un premier aspect, l'invention a pour objet un assemblage selon la revendication 1.

Selon une réalisation, la face d'appui et le moyen de positionnement se présentent comme un insert de rehausse en ceinture, d'axe de troisième direction, globalement rigide, ayant une face extérieure coopérant avec la face intérieure de la cavité, une face intérieure délimitant un trou complémentaire dans lequel pénètre le pion, et un bord haut formant une face d'appui conjuguée de la face d'appui de l'élément fonctionnel, située plus haut que la face haute extérieure de la paroi haute de la gaine, l'insert et l'élément intérieur étant solidaires l'un de l'autre et immobilisés l'un par rapport à l'autre, des moyens complémentaires d'immobilisation, comme des ergots ou des dents, étant prévus sur l'insert et l'élément intérieur.

Selon une réalisation, l'insert de rehausse comporte une garniture déformable située sur le bord haut formant siège, sur laquelle repose l'élément fonctionnel, et/ou une garniture déformable située sur une partie au moins de la face extérieure de l'insert.

Selon une réalisation, l'assemblage comporte également une pièce de verrouillage du pion dans la troisième direction, empêchant le pion de se désengager de la cavité de l'élément intérieur où il est logé.

Dans ce cas, selon une réalisation, la gaine comprend une paroi basse pourvue d'une lumière basse, le fourreau comprend une paroi basse pourvue d'un passage bas homologue de la lumière basse, la cavité est ouverte de part en part avec une ouverture haute et une ouverture basse, le pion comporte des lumières de verrouillage latérales, et la pièce de verrouillage, s'étendant globalement dans la troisième direction, comporte :
- un corps comprenant une base s'étendant globalement dans un troisième plan orthogonal à la troisième direction, deux bras allongés côte à côte s'étendant globalement dans la troisième direction et présentant une certaine capacité de déformation élastique à l'opposé de la base et pourvus de saillies de verrouillage à l'opposé de la base, et un passage central s'étendant globalement dans la troisième direction, ménagé dans la base et entre les bras,
- un coulisseau s'étendant globalement dans la troisième direction, comprenant une partie de manœuvre vers la base du corps, accessible, et une partie d'actionnement entre les bras du corps montée coulissant dans le passage central entre une position sortie inactive et une position rentrée active où elle est disposée entre les bras et les saillies de verrouillage, de sorte à les écarter mutuellement et empêcher qu'ils se rapprochent,
- des moyens d'immobilisation de de la pièce de verrouillage sur l'insert ou l'élément intérieur et des moyens de maintien du coulisseau dans le corps dans la position rentrée active,
de sorte que la pièce de verrouillage immobilise le pion de l'élément fonctionnel sur l'insert ou l'élément intérieur de la cassette par coopération des saillies de verrouillage dans les lumières de verrouillage.

Selon une réalisation, la cassette est immobilisée en position par contact sur la gaine avec des zones complémentaires conjuguées de la cassette et de la gaine comprenant des parties saillantes et/ou des parties découpées conjuguées.

Selon une réalisation, vus dans la troisième direction, l'ouverture haute de la cavité de l'élément intérieur et le pion ont, des contours situés au droit et de dimensions plus petites que le contour du passage haut qui lui-même a un contour situé au droit et de dimensions plus petites que le contour de la lumière haute.

Selon une réalisation, vue dans la troisième direction, l'ouverture basse de la cavité de l'élément intérieur a un contour situé au droit et de dimensions plus petites que le contour du passage bas qui lui-même a un contour situé au droit et de dimensions plus petites que le contour de la lumière basse.

Selon une réalisation, vue dans la troisième direction, l'ouverture haute et l'ouverture basse de la cavité de l'élément intérieur ont des dimensions identiques ou voisines, le passage haut et le passage bas ont des dimensions identiques ou voisines, la lumière haute et la lumière basse des dimensions identiques ou voisines.

Selon une réalisation, l'ouverture haute, l'ouverture basse de la cavité de l'élément intérieur et le pion ont des contours de forme générale simili-rectangulaire dans la première direction et la deuxième direction. La lumière haute, la lumière basse, le passage haut, le passage bas, l'insert, ont également des contours de forme générale simili-rectangulaire dans la première direction et la deuxième direction.

Selon une réalisation, le pion présente une paroi de forme cylindrique. En particulier, une paroi de forme cylindrique, creuse, et sur celle-ci des lumières de verrouillage latérales.

L'invention vise non seulement l'assemblage se trouvant à l'état monté, mais également l'assemblage se trouvant à l'état démonté, la gaine, la casette d'appui et de filtrage, le pion, le cas échéant l'insert de rehausse, la pièce de verrouillage étant dissociés les uns des autres, en tout ou partie.

Selon un deuxième aspect, l'invention a pour objet une cassette d'appui et de filtrage de vibrations selon la revendication 9.

Selon une réalisation, le fourreau extérieur comporte une ouverture située à l'une et/ou l'autre de ses extrémités.

Selon une réalisation, le fourreau extérieur comporte sur sa face extérieure des parties saillantes localisées, saillant vers l'extérieur, plus spécialement des parties saillantes localisées s'étendant dans la première direction, propres à un coulissement de montage avec ajustement de la cassette par rapport à la gaine de l'élément structurel. Ces parties saillantes localisées sont, selon les réalisations, des grains de riz et/ou des pattes découpées dans des échancrures et pouvant être sollicitées de façon élastique dans une direction vers l'intérieur et/ou vers l'extérieur du fourreau.

Selon une réalisation, le fourreau extérieur comporte des organes de blocage de fin de course, dans la première direction, par rapport à la gaine de l'élément structurel, sous la forme de redans saillants localisés, saillant vers l'extérieur de la face extérieure, disposés globalement dans un premier plan (P1) orthogonal à la première direction. Selon les réalisations, les redans saillants localisés sont des saillies fixes par rapport au fourreau et/ou des pattes pouvant être sollicitées de façon élastique dans une direction vers l'intérieur et/ou vers l'extérieur du fourreau.

Selon une réalisation, la courbe directrice simili-polygonale de l'enveloppe intérieure et de l'enveloppe extérieure du fourreau extérieur est de forme simili-rectangulaire, l'ensemble-paroi périphérique comportant une paroi haute, une paroi basse et deux parois latérales.

Selon une réalisation, la paroi basse du fourreau extérieur est pourvue d'un passage bas.

Selon une réalisation, le noyau central s'inscrit dans une enveloppe extérieure de forme générale simili-parallélépipédique avec deux faces latérales, deux faces d'extrémité dans la première direction, une face haute, où se trouve l'ouverture haute de la cavité, et une face basse, l'une et l'autre dans la troisième direction, et sur lesquelles se trouvent les parties déformables élastiquement conformées vers l'extérieur aptes à contribuer au filtrage et en réponse à des sollicitations dans la troisième direction dépassant ledit certain plafond à venir en butée. En particulier, le noyau central comporte une cavité traversante de part en part, d'axe de troisième direction, avec une ouverture haute dans la face haute et une ouverture basse dans la face basse.

Selon une réalisation, le noyau central de l'élément intérieur comporte :
- une âme rigide ayant :
   ∘ une partie centrale creuse de sorte à former et à limiter la cavité de l'élément intérieur et son ouverture haute, et
   ∘ deux ailes disposées de part et d'autre de la partie centrale et s'étendant dans la première direction comportant deux faces d'extrémité,
- une garniture périphérique, élastiquement déformable, comportant les parties déformables élastiquement conformées vers l'extérieur, recouvrant l'âme rigide, à l'exception d'une partie au moins de ses faces d'extrémité.

Selon une réalisation, les ailes de positionnement, support, filtrage et rattrapage des dispersions dimensionnelles de l'élément intérieur sont attenantes aux faces latérales du noyau et soit se déploient de sorte à avoir une projection orthogonale substantielle sur un troisième plan orthogonal à la troisième direction soit se déploient dans un plan incliné sur le troisième plan de sorte à être rigidement associées aux deux parois latérales du fourreau.

Selon les réalisations, les ailes de positionnement, support, filtrage et rattrapage des dispersions dimensionnelles sont situées le long de la première direction, de façon continue ou bien elles sont situées le long de la première direction, de façon discontinue, sous forme d'ailes élémentaires contigües ou espacées.

Selon une réalisation, les ailes de positionnement, support, filtrage et rattrapage des dispersions dimensionnelles sont situées le long de la première direction, sur une partie notable de la cassette entre ses deux extrémités dans la première direction.

Selon une réalisation, vue dans la troisième direction, l'ouverture haute de la cavité de l'élément intérieur a un contour situé au droit et de dimensions plus petites que le contour du passage haut et/ou l'ouverture basse de la cavité a un contour situé au droit et de dimensions plus petites que le contour du passage bas.

Selon une réalisation, vue dans la troisième direction, l'ouverture haute et l'ouverture basse de la cavité de l'élément intérieur ont des dimensions identiques ou voisines et/ou le passage haut et le passage bas ont des dimensions identiques ou voisines.

L'invention vise non seulement la cassette se trouvant à l'état monté, mais également l'assemblage se trouvant à l'état où elle se trouve avant l'état monté, avant qu'elle supporte l'élément fonctionnel. Dans cet état, les parties déformables élastiquement, conformées vers l'extérieur, viennent en butée ou sont proches de la face inférieure de la paroi haute du fourreau.

Selon un troisième aspect, l'invention a pour objet un insert de rehausse selon la revendication 14.

Selon une réalisation, l'insert comporte une garniture déformable située sur le bord haut formant siège et/ou une garniture déformable située sur une partie au moins de sa face extérieure.

Selon un quatrième aspect, l'invention a pour objet une pièce de verrouillage selon la revendication 15.

On décrit maintenant brièvement les figures des dessins.

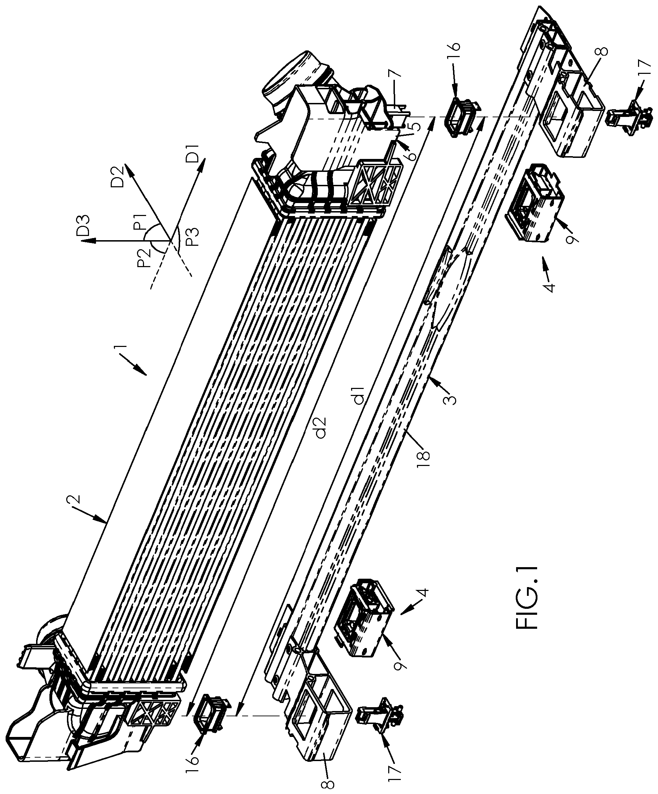

La figure 1 est une vue générale en perspective éclatée d'un assemblage selon l'invention - non encore monté - montrant un élément fonctionnel, un élément structurel et deux ensembles d'assemblage analogues, écartés l'un de l'autre le long de l'élément structurel et de la partie basse de l'élément fonctionnel, chaque ensemble d'assemblage étant tel qu'il comprend une gaine rigide faisant partie et corps avec l'élément structurel, une cassette d'appui et de filtrage de vibrations incluant un fourreau extérieur rigide et un élément intérieur, au moins pour partie élastiquement déformable, l'élément fonctionnel présente en partie basse une face d'appui et faisant corps avec elle un pion saillant vers le bas, un insert de rehausse et une pièce de verrouillage du pion.

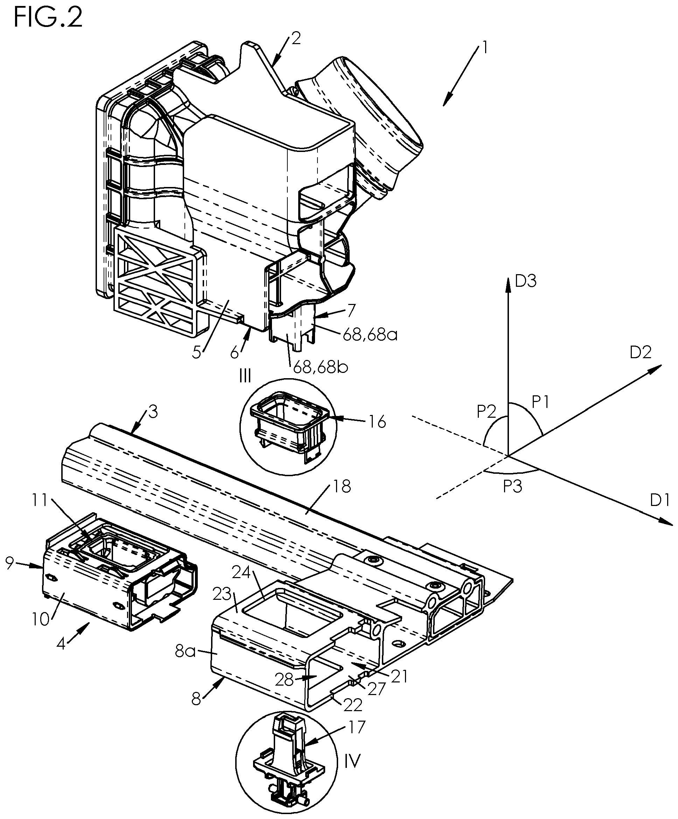

La figure 2 est une vue partielle et agrandie de la figure 1, portant sur un seul élément d'assemblage.

La figure 3 est une vue en perspective de l'insert de rehausse formant la partie III de la figure 2.

La figure 4 est une vue en perspective de la pièce de verrouillage du pion formant la partie IV de la figure 2.

Les figures 5 et 6 sont deux vues en perspective, sous deux angles différents, de la gaine rigide faisant partie et corps avec l'élément structurel et de la cassette d'appui et de filtrage de vibrations incluant un fourreau extérieur rigide et un élément intérieur, au moins pour partie élastiquement à l'état avant montage par coulissement dans une première direction. La figure 5 illustre deux détails agrandis illustrant des parties saillantes et des parties découpées pour le coulissement de la cassette dans la gaine et la figure 6 un détail agrandi analogue.

La figure 7 est une vue d'extrémité, dans la première direction, de la cassette d'appui et de filtrage de vibrations montrant son fourreau extérieur rigide et son élément intérieur, au moins pour partie élastiquement déformable qui lui-même comprend un noyau central formé d'une âme rigide et d'une garniture périphérique, élastiquement déformable, et deux ailes de positionnement, support, filtrage et rattrapage des dispersions dimensionnelles entre l'élément fonctionnel et l'élément structurel.

La figure 8 est une vue analogue à la figure 7 illustrant la cassette d'appui et de filtrage de vibrations montée dans la gaine rigide de l'élément structurel.

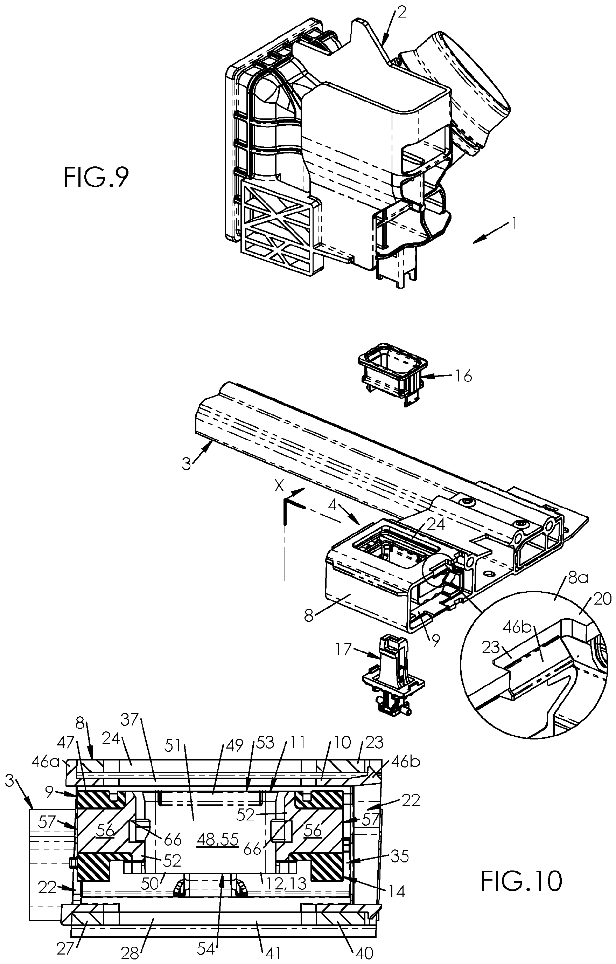

La figure 9 est une vue analogue à la figure 2, illustrant la cassette d'appui et de filtrage de vibrations montée dans la gaine rigide de l'élément structurel. Cette figure illustre un détail des organes de fin de course de la cassette dans le fourreau.

La figure 10 est une vue en coupe selon la ligne X de la figure 9.

La figure 11 est une vue analogue à la figure 9, illustrant l'insert de rehausse monté dans la cassette d'appui et de filtrage de vibrations, elle-même montée dans la gaine rigide de l'élément structurel.

La figure 12 est une vue en coupe selon la ligne XII de la figure 11.

La figure 13 est une vue analogue à la figure 11, illustrant le pion monté dans l'insert de rehausse, lui-même monté dans la cassette d'appui et de filtrage de vibrations, elle-même montée dans la gaine rigide de l'élément structurel. Cette figure représente l'assemblage à l'état monté, sauf en ce qui concerne l'organe de verrouillage.

La figure 14 est une vue en coupe de la figure 13 et elle représente l'assemblage à l'état monté.

Ci-après un exposé détaillé de plusieurs modes de réalisation de l'invention assorti d'exemples et de référence aux dessins.

Un assemblage 1 selon l'invention est conçu pour - à l'état monté - le support avec filtrage de vibrations d'un élément fonctionnel 2 - comme étant ou comprenant un ventilateur, un échangeur de chaleur, un condenseur -sur un élément structurel 3, rigide, étendu dans une première direction D1 du corps d'un engin - comme un appareil ou un véhicule à moteur -.

Il est entendu que l'élément fonctionnel 2 peut remplir une autre fonction que l'une de celles mentionnées et que l'engin peut être autre qu'un appareil ou un véhicule à moteur.

Il est entendu que l'invention porte non seulement sur l'assemblage 1, mais également sur l'élément fonctionnel 2 - comme étant ou comprenant un ventilateur, un échangeur de chaleur, un condenseur - spécialement apte et destinée à faire partie de l'assemblage 1, et sur l'engin - comme un appareil ou un véhicule à moteur - comportant un tel élément fonctionnel 2 supporté avec filtrage de vibrations par l'élément structurel 3, moyennant l'assemblage 1.

L'assemblage 1 est adapté au cas où l'élément fonctionnel 2, en fonctionnement, génère des vibrations, comme par exemple celles produites par des éléments tournants comme dans le cas d'un ventilateur, et au cas où l'engin, en fonctionnement, génère des vibrations. L'assemblage 1 a alors pour fonction de supprimer ou d'atténuer les vibrations dans le sens élément fonctionnel 2 vers engin, comme dans le sens inverse engin vers élément fonctionnel 2.

La description est faite plus spécialement en relation avec l'assemblage 1 à l'état monté et dans la position usuelle dans laquelle il se trouve. Cette position est telle que la première direction D1 est sensiblement horizontale. L'élément fonctionnel 2 s'étend horizontalement dans la première direction D1 et verticalement dans une troisième direction sensiblement verticale D3. C'est en référence à cette disposition que doivent être compris les termes « haut » et « bas ».

On désigne par D2 une deuxième direction, sensiblement horizontale et orthogonale à la première direction D1.

Les trois directions D1, D2 et D3 définissent un référentiel à trois directions.

On désigne par premier plan P1, un plan sensiblement vertical orthogonal à la première direction D1, par deuxième plan P2, un plan sensiblement vertical orthogonal à la deuxième direction D2, et par troisième plan P3, un plan sensiblement horizontal orthogonal à la troisième direction D3.

Cette disposition n'est en rien limitative, l'assemblage 1 pouvant se trouver dans une autre disposition.

L'assemblage 1 comprend deux ensembles d'assemblage analogues 4, écartés l'un de l'autre, le long de la première direction D1, de l'élément structurel 3 et de la partie basse 5 de l'élément fonctionnel 2.

L'élément fonctionnel 2 présente dans la partie basse 5 une face d'appui 6 et faisant corps avec elle deux pions 7 saillant vers le bas dans la troisième direction D3, écartés l'un de l'autre, le long de la première direction D1.

Les deux parties structurelles de l'assemblage 1 sont espacées l'une de l'autre d'une distance d1 dans la direction D1 et les deux pions 7 sont espacés l'un de l'autre d'une distance d2 dans la direction D1. Les distances d1 et d2 résultent de la fabrication de l'élément structurel 3 et de l'élément fonctionnel 2. Pour que les deux ensembles d'assemblage 4 soient opérants il importe que d1 et d2 soient parfaitement égaux, mais tel ne peut être le cas, du fait des tolérances dimensionnelles de fabrication, s'agissant de pièces de grande taille, fabriquées en grandes séries. Il existe par conséquent des écarts de dimensions, appelées dispersions, ici principalement dans la direction D1. Pour que l'assemblage soit opérant dans les meilleures conditions et avec la plus grande efficacité, il importe de rattraper les dispersions longitudinales, ce que précisément assure l'assemblage 1 selon l'invention.

Les deux ensembles d'assemblage 4 étant analogues, on se borne par la suite à n'en décrire qu'un, sa structure assurant le rattrapage de dispersions longitudinales. Cet ensemble d'assemblage est désigné le plus souvent de façon synthétique et abrégée par le terme « assemblage » qui doit donc être compris comme signifiant aussi « ensemble d'assemblage ».

Chaque ensemble d'assemblage 4 comprend, dans la réalisation représentée sur les figures :
- une gaine rigide 8 faisant partie et corps avec l'élément structurel 3, dénommée parfois de façon synthétique « gaine »,
- une cassette d'appui et de filtrage de vibrations 9, dénommée parfois de façon synthétique « cassette », incluant un fourreau extérieur rigide 10 et un élément intérieur 11, au moins pour partie élastiquement déformable, qui lui-même comprend un noyau central 12 formé d'une âme rigide 13 et d'une garniture périphérique 14, élastiquement déformable, et deux ailes 15 de positionnement, support, filtrage et rattrapage des dispersions dimensionnelles,
- un insert de rehausse 16, dénommée parfois de façon synthétique « insert »,
- et une pièce de verrouillage 17 du pion 7.

Dans d'autres réalisations, l'assemblage 1 peut ne pas comporter un insert de rehausse 16 distinct ou bien ne pas comporter de pièce de verrouillage 17 du pion 7, ce dernier n'étant pas verrouillé en position.

Outre que la disposition de l'assemblage 1 n'est en rien limitative, comme indiqué, l'invention vise non seulement l'assemblage 1 se trouvant à l'état monté, mais également l'assemblage 1 se trouvant à l'état démonté, la gaine 8, la casette 9, le pion 7, le cas échéant l'insert 16 et la pièce de verrouillage 17 étant dissociés les uns des autres, en tout ou partie.

L'élément structurel 3 comporte une traverse 18, en l'espèce une traverse basse profilée rigide. Le plus souvent, une telle traverse 18 est disposée transversalement dans le compartiment moteur de l'engin, vers l'avant.

La gaine 8 est rigidement fixée sur la traverse 18 vers sa partie terminale et sur un côté latéral. Le terme « latéral » doit être compris comme ce qui est situé sur le côté par rapport à un axe de première direction passant par la gaine 8 et la cassette 9. Selon les réalisations, la gaine 8 est rapportée sur la traverse 18 ou bien venue de fabrication avec elle.

La gaine 8 est formée par un ensemble-paroi périphérique 8a ayant une face intérieure 19 et une face extérieure 20. Elle forme un espace creux intérieur 21 qui comporte une ouverture 22 située à chaque extrémité de la gaine 8 dans la première direction D1.

Par « ensemble-paroi », il faut comprendre une paroi ou plusieurs parois associées rigidement entre elles, le tout formant un ensemble.

Par « intérieur » et « extérieur », relativement aux faces 19 et 20 et éléments associés, il faut comprendre ce qui se trouve dans la gaine 8 et hors d'elle, respectivement.

L'ensemble-paroi périphérique 8a s'inscrit entre une enveloppe intérieure et une enveloppe extérieure. Chacune de ces enveloppes est de forme générale simili-cylindrique, d'axe de première direction D1, de segment générateur simili-droit et de courbe directrice simili-polygonale, en l'espèce simili rectangulaire.

Par le préfixe « simili », il faut comprendre que ce qui est ainsi qualifié a la forme associée au préfixe ou bien une forme plus ou moins voisine ou dérivée.

L'ensemble-paroi périphérique 8a comprend une paroi haute 23 pourvue d'une lumière haute 24, ayant une face haute extérieure 25 et une face haute intérieure 26.

L'ensemble-paroi périphérique 8a comprend une paroi basse 27, qui dans la réalisation représentée sur les figures, est pourvue d'une lumière basse 28, de sorte à monter la pièce de verrouillage 17 lorsqu'elle est prévue.

La paroi basse 27 comporte une face basse extérieure 29 et une face basse intérieure 30.

Les parois 23 et 27 sont situées à l'aplomb l'une de l'autre dans la troisième direction D3. Elles sont de dimensions identiques ou voisines et de forme générale simili-rectangulaire dans la première direction D1 et la deuxième direction D2.

Les faces hautes 25 et 26 et basses 29 et 30, s'étendent dans la première direction D1 et dans la deuxième direction D2, c'est-à-dire dans le troisième plan P3.

Dans la réalisation représentée sur les figures, la lumière haute 24 et la lumière basse 28 sont situées à l'aplomb l'une de l'autre dans la troisième direction D3. Elles sont de dimensions identiques ou voisines et de forme générale simili-rectangulaire dans la première direction D1 et la deuxième direction D2.

Dans d'autres réalisations, il n'est prévu que la lumière haute 24 et aucune lumière basse.

L'ensemble-paroi périphérique 8a comprend également deux parois latérales 31 reliant la paroi haute 23 et la paroi basse 27.

L'invention vise aussi l'élément structurel 3 spécialement apte et destiné à faire partie de l'assemblage 1 qui comporte une gaine 8 telle qu'elle vient d'être décrite pour chaque ensemble d'assemblage 4.

Le fourreau extérieur rigide 10 est formé par un ensemble-paroi périphérique 10a ayant une face intérieure 32 et une face extérieure 33. Il forme une zone creuse intérieure 34 qui comporte une ouverture 35 située à chaque extrémité du fourreau 10 dans la première direction D1.

L'expression « ensemble-paroi » doit être comprise comme précédemment.

Par « intérieur » et « extérieur », relativement aux faces 32 et 33 et éléments associés, il faut comprendre ce qui se trouve dans le fourreau 10 et hors de lui, respectivement.

L'ensemble-paroi périphérique 10a s'inscrit entre une enveloppe intérieure et une enveloppe extérieure. Chacune de ces enveloppes est de forme générale simili-cylindrique, d'axe de première direction D1, de segment générateur simili-droit et de courbe directrice simili-polygonale, en l'espèce simili rectangulaire.

L'ensemble-paroi périphérique 10a comprend une paroi haute 36 pourvue d'un passage haut 37, ayant une face haute extérieure 38 et une face haute intérieure 39.

L'ensemble-paroi périphérique 10a comprend une paroi basse 40, qui dans la réalisation représentée sur les figures, est pourvue d'un passage bas 41, de sorte à monter la pièce de verrouillage 17 lorsqu'elle est prévue.

La paroi basse 40 comporte une face basse extérieure 42 et une face basse intérieure 43.

Les parois 36 et 40 sont situées à l'aplomb l'une de l'autre dans la troisième direction D3. Elles sont de dimensions identiques ou voisines et de forme générale simili-rectangulaire dans la première direction D1 et la deuxième direction D2.

Les faces hautes 38 et 39 et basses 42 et 43, s'étendent dans la première direction D1 et dans la deuxième direction D2, c'est-à-dire dans le troisième plan P3.

Dans la réalisation représentée sur les figures, le passage haut 37 et le passage bas 41 sont situés à l'aplomb l'un de l'autre dans la troisième direction D3. Ils sont de dimensions identiques ou voisines et de forme générale simili-rectangulaire dans la première direction D1 et la deuxième direction D2.

Dans d'autres réalisations, il n'est prévu que le passage haut 37 et aucun passage bas.

Le passage haut 37 est homologue de la lumière haute 24 et le passage bas est homologue de la lumière basse 28.

L'ensemble-paroi périphérique 10a comprend également deux parois latérales 44 reliant la paroi haute 36 et la paroi basse 40.

L'enveloppe extérieure du fourreau 10 est complémentaire de l'enveloppe intérieure de la gaine 8, de sorte à permettre un coulissement du fourreau 10 dans la gaine 8 et une immobilisation en position en fin de course, par contact mutuel. Le fourreau 10 est donc assemblé rigidement à la gaine 8 par un coulissement dans la première direction D1 et des organes de blocage de fin de course.

Le fourreau 10 est logé tout entier dans l'espace creux 21. Le fourreau 10 et la gaine 8 ont dans la première direction D1 une même longueur ou des longueurs voisines, les ouvertures terminales 22 et 35 étant situées plus ou moins dans deux mêmes premiers plans.

Pour immobiliser en position le fourreau 10, et donc la cassette 9, par contact sur la face intérieure 19 de la gaine 8, il est prévu des zones complémentaires conjuguées du fourreau 10, et donc de la cassette 9, et de la gaine 8 comprenant, s'agissant du fourreau 10, des parties saillantes 45a fixes par rapport au fourreau 10, ou bien des parties saillantes découpées et déplaçables 45b. Ces parties 45a, 45b sont conjuguées de parties complémentaires de la face intérieure 19 de la gaine 8, formées par exemple par la face 19 elle-même.

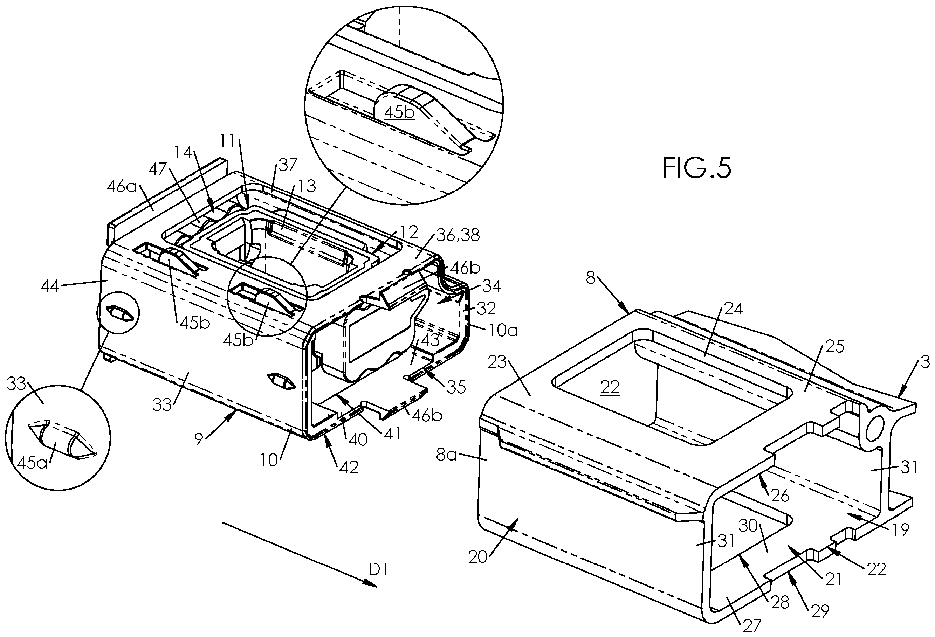

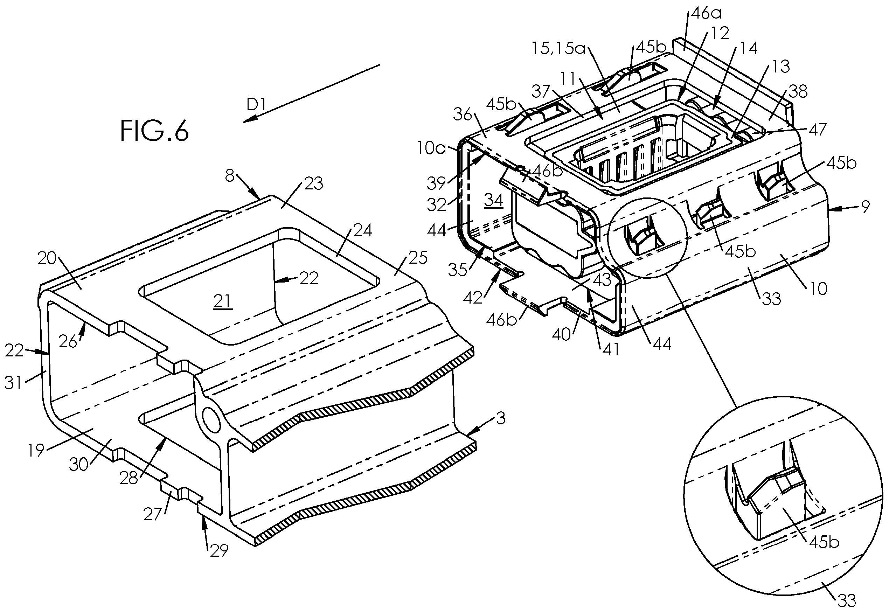

Comme illustré plus particulièrement par les figures 5 et 6 et les détails agrandis de ces figures, les parties saillantes 45a, 45b sont localisées et s'étendent dans la première direction D1. Elles sont propres à un coulissement de montage avec ajustement du fourreau 10, et donc de la cassette 9, par rapport à la gaine 8 de l'élément structurel 3. Ces parties saillantes localisées sont, par exemple, des grains de riz 45a ou bien des pattes 45b découpées dans des échancrures et pouvant être sollicitées de façon élastique par rapport au fourreau dans la troisième direction D3, de sorte à venir au contact de la face intérieure 19 de la gaine 8.

Le fourreau 10 est assemblé à la gaine 8 par coulissement et comporte des organes de blocage de fin de course dans la première direction D1, par rapport à la gaine 9 de l'élément structurel 3. Comme illustré plus particulièrement par les figures 5 et 6, ces organes de blocage de fin de course sont sous la forme de redans saillants localisés 46a, 46b, saillant vers l'extérieur de la face extérieure 33 du fourreau 10 et notamment de la face haute extérieure 38 de la paroi haute 36. Ces redans sont disposés globalement dans le premier plan P1, c'est-à-dire orthogonaux à la première direction D1 de coulissement. Ces redans sont par exemple une saillie fixe 46a par rapport au fourreau 10 ou une patte 46b découpée dans une échancrure et pouvant être sollicitée de façon élastique par rapport au fourreau dans la troisième direction D3. Ces redans peuvent ainsi venir s'appliquer contre les deux bords des ouvertures terminales 22 situés sur la paroi haute 23 de la gaine. D'un côté, une saillie fixe 46a et de l'autre côté une patte 46b. Avec une telle disposition, le fourreau 10 est bloqué en fin de course de coulissement par la saillie fixe 46a et il ne peut se déplacer en sens opposé par la patte 46b.

L'élément intérieur 11, au moins pour partie élastiquement déformable grâce à la garniture périphérique 14 en caoutchouc ou autre matériau analogue du point de vue de la déformation élastique, est logé tout entier dans la zone creuse 34 du fourreau 10 et porté par lui. Il comprend, d'une part, le noyau central 12 formé de l'âme rigide 13 et de la garniture périphérique 14, et, d'autre part, deux ailes 15 de positionnement, support, filtrage et rattrapage des dispersions dimensionnelles. Le noyau 12 est porté par les ailes 15, élastiquement déformables, de sorte à être en quelque sorte « flottant » dans la zone creuse 34, par rapport au fourreau 10, et donc par rapport à la gaine 8 et l'élément structurel 3. En outre, le noyau 12 est lui-même pour partie élastiquement déformables grâce à la garniture périphérique 14. Et il peut venir en butée contre le fourreau 10. C'est ainsi qu'en définitive, le noyau 12 assure en combinaison, d'une part, la fonction de suppression ou du moins d'atténuation des vibrations dans le sens élément fonctionnel 2 vers engin (et donc élément structurel 3), comme dans le sens inverse engin (et donc élément structurel 3) vers élément fonctionnel 2 et, d'autre part, la fonction de rattrapage des dispersions, notamment longitudinales entre l'élément fonctionnel 2 et l'élément structurel 3.

Ainsi, en réponse à des sollicitations dans la troisième direction D3, inférieures à un certain plafond, le noyau 12 est déplacé dans la zone creuse 34 en restant écarté de la face intérieure 32 du fourreau 10.

Le noyau 12 inclut, d'une part, des parties déformables élastiquement 47, conformées vers l'extérieur, aptes à contribuer au filtrage. Ces parties déformables font partie de la garniture périphérique 14. En réponse à des sollicitations dans la troisième direction D3 dépassant ledit certain plafond, les parties déformables élastiquement 47 viennent en butée contre la face intérieure 32 du fourreau 10.

Le noyau 12 inclut, d'autre part, une cavité 48, avec une ouverture haute 49, homologue du passage haut 37.

Dans la réalisation représentée sur les figures, la cavité 48 est ouverte de part en part, avec en outre une ouverture basse 50, de sorte à monter la pièce de verrouillage 17 lorsqu'elle est prévue.

Dans la réalisation représentée sur les figures, l'ouverture haute 49 et l'ouverture basse 50 de la cavité 48 sont situées à l'aplomb l'une de l'autre dans la troisième direction D3. Elles sont de dimensions identiques ou voisines et de forme générale simili-rectangulaire dans la première direction D1 et la deuxième direction D2.

Ainsi, la cavité 48 est limitée par une enveloppe de forme générale simili-cylindrique, d'axe de troisième direction D3, de segment générateur simili-droit et de courbe directrice simili rectangulaire.

Dans la réalisation représentée sur les figures, le noyau central 12 s'inscrit dans une enveloppe extérieure de forme générale simili-parallélépipédique. Il comporte deux faces latérales 51 et deux faces d'extrémité 52 dans la première direction D1. Il comporte en outre une face haute 53 où se trouve l'ouverture haute 49 de la cavité 48, et une face basse 54 où se trouve l'ouverture basse 50. Ces deux faces 53 et 54 sont dans la troisième direction D3.

Les parties 47 sont sur les faces latérales 51, haute 53 et basse 54. Les faces d'extrémité 52 sont dépourvues de parties déformables.

Les parties déformables élastiquement 47, conformées vers l'extérieur, sont aptes à contribuer au filtrage et en réponse à des sollicitations dans la troisième direction dépassant ledit certain plafond à venir en butée contre la face intérieure 32 de la paroi haute 36 ou de la paroi basse 40 du fourreau 10.

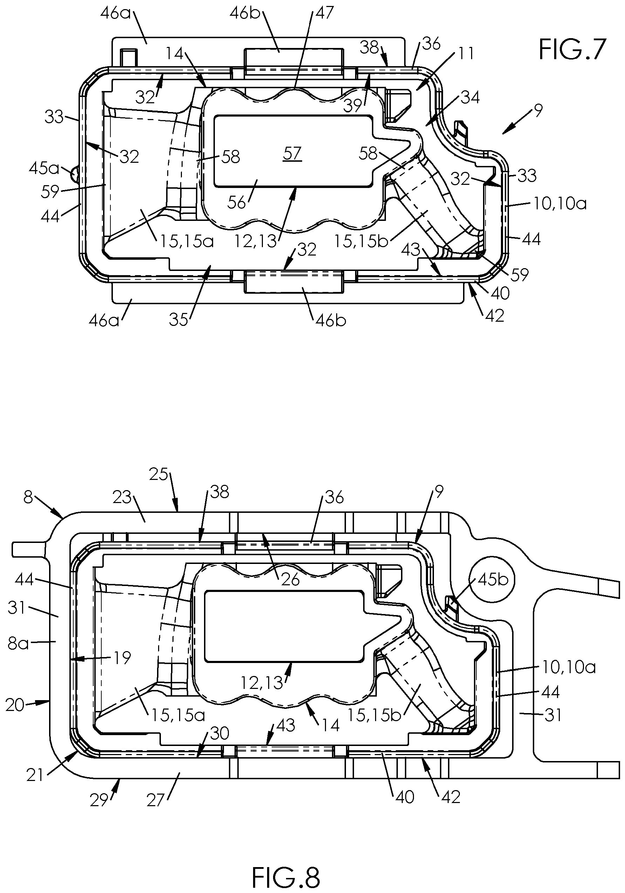

Comme représenté tout spécialement sur les figures 7 et 8, les parties déformables élastiquement 47 se trouvant sur les faces haute 53 et basse 54 du noyau 12 comportent une face extérieure avec des ondulations moyennant des parties saillantes et des parties en creux.

Dans la réalisation représentée, le noyau central 12 de l'élément intérieur 11 comporte l'âme rigide 13 et la garniture périphérique 14.

L'âme rigide 13 comporte en premier lieu une partie centrale creuse 55, de sorte à former et à limiter la cavité 48 et ses ouvertures haute 49 et basse 50.

L'âme rigide 13 comporte en second lieu deux ailes 56 disposées de part et d'autre de la partie centrale 55 et s'étendant dans la première direction D1, ayant à leurs deux extrémités dans la direction D1, deux faces d'extrémité 57.

La garniture périphérique 14 qui est élastiquement déformable et inclus les parties déformables élastiquement conformées vers l'extérieur 47, recouvre et « enrobe » l'âme rigide 13, à l'exception d'une partie au moins, et plus spécialement de l'intégralité, de ses faces d'extrémité 57.

Les ailes 15 de positionnement, support, filtrage et rattrapage des dispersions dimensionnelles entre l'élément fonctionnel 2 et l'élément structurel 3, notamment dans la première direction D1, sont situées latéralement de part et d'autre du noyau 12. Elles se déploient jusqu'au fourreau 10 auquel elles sont rigidement associées.

Les ailes 15 sont situées le long de la première direction D1.

Les ailes 15 sont déformables élastiquement dans les première, deuxième et troisième directions D1, D2 et D3.

On se réfère maintenant plus spécialement aux figures 7 et 8 qui illustrent une réalisation dans laquelle les ailes 15 sont attenantes par leurs extrémités proximales 58 aux faces latérales 51 du noyau 12 et rigidement associées par leurs extrémités distales 59 aux deux parois latérales 44 du fourreau 10.

L'aile de gauche 15a, située du côté gauche sur les figures 7 et 8, se déploie parallèlement au troisième plan P3, ce qui revient à avoir une projection orthogonale intégrale sur le troisième plan P3.

L'aile de gauche 15a est massive et s'étend dans la troisième direction D3 sur presque toute la hauteur du noyau 12 entre ses faces haute 53 et basse 54. Sa partie proximale 58 est arrondie en creux pour ne pas entraver les déplacements. Sa partie distale 59 est attenante à la face intérieure 32 de la paroi latérale de gauche 44 du fourreau 10 et s'étend dans la troisième direction D3 sur presque toute la hauteur de cette paroi latérale de gauche 44 entre les parois haute 36 et basse 40.

L'aile de droite 15b, située du côté droit sur les figures 7 et 8, se déploie dans un plan incliné sensiblement à 45° sur le troisième plan P3. Sa projection orthogonale sur le troisième plan P3 est donc substantielle.

L'aile de droite 15b est moins massive que l'aile de gauche 15a, étant d'épaisseur plus mince dans la troisième direction D3. Par suite, elle s'étend dans la troisième direction D3 sur une partie seulement de la hauteur du noyau 12. Sa partie proximale 58 est située entre - et écartée - des faces haute 53 et basse 54 du noyau 12. Sa partie distale 59 est attenante à la face intérieure 32 de la paroi latérale de droite 44 du fourreau 10 dans l'angle de raccordement avec sa paroi basse 40.

Dans la réalisation représentée sur les figures, les ailes 15 sont situées le long de la première direction D1, de façon continue, sur une partie notable de la cassette entre ses deux extrémités dans la première direction. Plus précisément, les ailes 15 s'étendent sur environ la longueur de la partie centrale 55 de l'âme rigide 13.

Dans d'autres réalisations possibles, les ailes 15 sont situées le long de la première direction D1, de façon discontinue, sous forme d'ailes élémentaires qui sont contigües ou bien espacées les unes des autres.

Dans tous les cas, les ailes 15 doivent pouvoir être déformées dans la première direction D1 de manière à rattraper les dispersions dimensionnelles longitudinales dans la première direction D1, entre l'élément fonctionnel 2 et l'élément structurel 3.

L'invention vise aussi la cassette 9 telle qu'elle a été décrite, spécialement apte et destiné à faire partie de l'assemblage 1, que cette cassette 9 soit à l'état monté ou à l'état avant montage.

Pour la réalisation, on réalise l'âme rigide 13 et le fourreau rigide 10. Puis, on dispose l'âme 13 dans la zone creuse intérieure 34 du fourreau 10, en étant écarté du fourreau 10 lui-même, et sans contact avec lui. Puis, on injecte de la matière élastiquement déformable dans un moule reliant l'âme 13 et le fourreau 10, de sorte à réaliser la garniture élastiquement déformable 14 et les ailes 15 qui forment un ensemble d'un seul tenant.

Dans la réalisation représentée sur les figures, vus dans la troisième direction D3, l'ouverture haute 49 de la cavité 48 de l'élément intérieur 11 et le pion 7 ont, des contours situés au droit et de dimensions plus petites que le contour du passage haut 37 qui lui-même a un contour situé au droit et de dimensions plus petites que le contour de la lumière haute 24. En outre, vue dans la troisième direction D3, l'ouverture basse 50 de la cavité 48 a un contour situé au droit et de dimensions plus petites que le contour du passage bas 41 qui lui-même a un contour situé au droit et de dimensions plus petites que le contour de la lumière basse 28. Enfin, vues dans la troisième direction D3, l'ouverture haute 49 et l'ouverture basse 50 de la cavité 48 ont des dimensions identiques ou voisines, le passage haut 37 et le passage bas 41 ont des dimensions identiques ou voisines, la lumière haute 24 et la lumière basse 28 des dimensions identiques ou voisines.

L'élément fonctionnel 2 présente dans la partie basse 5 la face d'appui 6 et faisant corps avec elle le pion 7. Ainsi, le poids et les forces crées par l'élément fonctionnel 2 sont encaissés par le noyau central 12 de l'élément intérieur 11 par l'intermédiaire de la face d'appui 6 et d'une face d'appui 60 conjuguée, associée au noyau 12.

Le positionnement fixe de l'élément fonctionnel 2 par rapport à l'élément intérieur 11 dans la première direction D1 et dans la deuxième direction D2 est assuré par un moyen de positionnement fixe du pion 7 dans la cavité 48 de l'élément intérieur 11 où il est logé, tandis que le pion 7 traverse la lumière haute 24 et le passage haut 37.

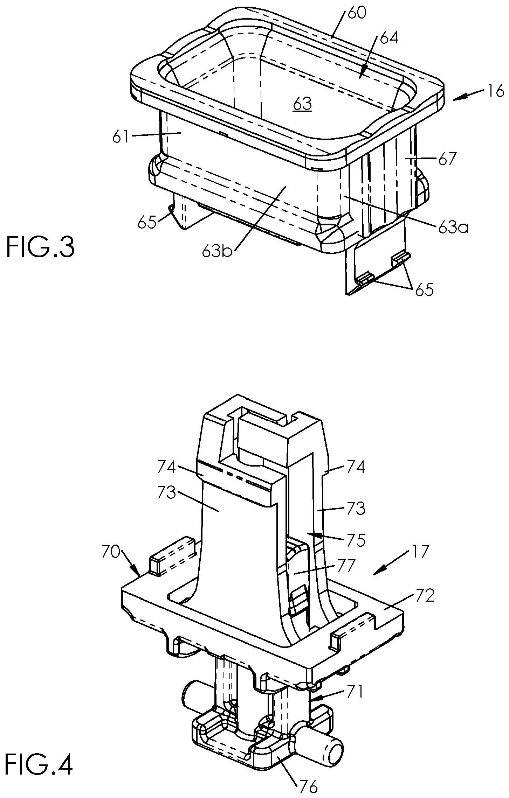

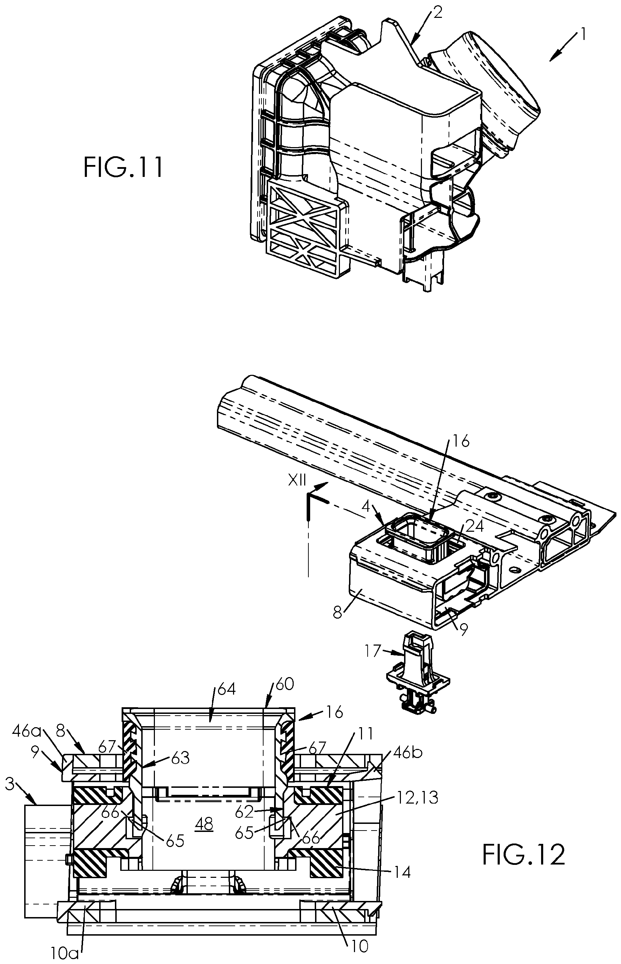

Dans la réalisation représentée tout spécialement sur les figures 3 et 12, la face d'appui 60 et le moyen de positionnement sont formés par l'insert de rehausse 16.

L'invention vise aussi l'élément fonctionnel 2 tel qu'il a été décrit, spécialement apte et destiné à faire partie de l'assemblage 1.

L'insert 16 a une forme générale de ceinture, d'axe de troisième direction D3.

L'insert 16 est globalement rigide, ayant une face extérieure 61 coopérant avec la face intérieure 62 de la cavité 48.

L'insert 16 comporte une face intérieure 63 délimitant un trou 64 complémentaire dans lequel pénètre le pion 7.

La face extérieure 61et la face intérieure 63 de l'insert 16 sont inscrites dans deux enveloppes de forme générale simili-cylindrique, d'axe de troisième direction D3, de segment générateur simili-droit et de courbe directrice simili rectangulaire. Ainsi, la face intérieure 63 comporte deux faces 6a face à face, situées parallèlement au premier plan P1 et deux faces 63b face à face, situées parallèlement au deuxième plan P2.

Vu dans la troisième direction D3, l'ouverture du trou 64 formé par la face intérieure 63 de l'insert 16 a un contour situé au droit et de dimensions plus petites que le contour de l'ouverture haute 49 de la cavité 48 de l'élément intérieur 11.

L'insert 16 comporte un bord haut 60 formant la face d'appui 60 conjuguée de la face d'appui 5. Cette face d'appui 60 est située plus haut que la face haute extérieure 25 de la paroi haute 23 de la gaine 8, d'où la qualification de « rehausse ».

L'insert 16 et l'élément intérieur 11 sont rendus solidaires l'un de l'autre et immobilisés l'un par rapport à l'autre. A cet effet, il est prévu des moyens complémentaires d'immobilisation, comme des ergots ou des dents 65 sur l'insert 16, coopérant avec des lumières, décrochements, saillies 66 prévus sur l'élément intérieur, à savoir sur l'âme rigide 13 en position médiane entre les faces haute 53 et basse 54.

Selon une réalisation possible, l'insert 16 comporte une garniture déformable située sur le bord 60 formant siège, sur laquelle repose l'élément fonctionnel 2.

Dans la réalisation représentée sur les figures, l'insert 16 comporte également une garniture déformable 67 située sur une partie au moins de sa face extérieure 61.

A l'instar de la face intérieure 63 de l'insert 16 délimitant le trou 64, le pion 7 présente une paroi 68 de forme cylindrique inscrite dans une enveloppe de forme générale simili-cylindrique, d'axe de troisième direction D3, de segment générateur simili-droit et de courbe directrice simili rectangulaire. Ainsi, la paroi 68 est formée de deux parois 68a face à face, situées parallèlement au premier plan P1 et deux parois 68b face à face, situées parallèlement au deuxième plan P2. La paroi 68 est creuse et ouverte en partie basse, ce qui permet l'introduction de la pièce de verrouillage 17.

Sur la paroi 68 sont ménagées des lumières de verrouillage 69, latérales, situées dans la réalisation représentée sur les figures sur les parois 68b, avec lesquelles coopère la pièce de verrouillage 17.

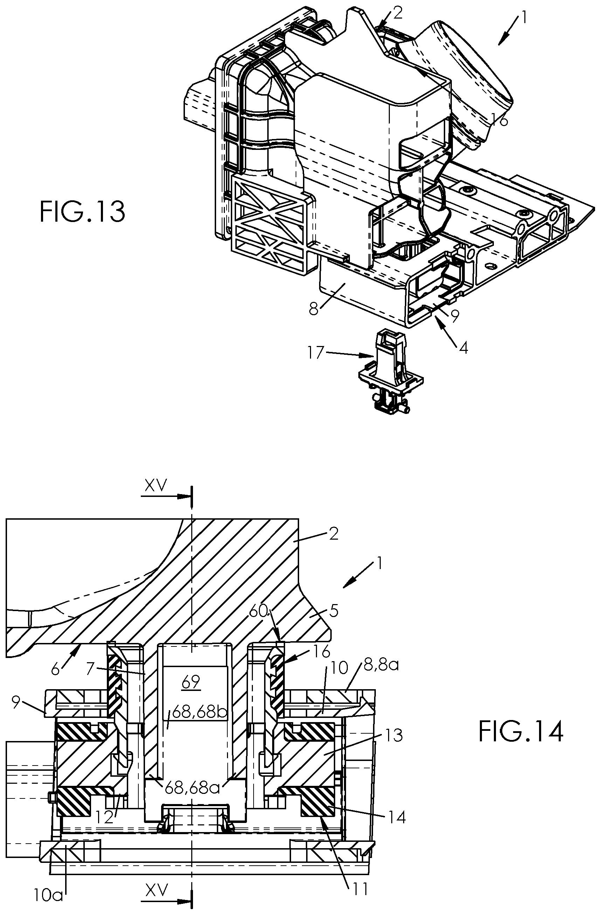

Comme représenté sur la figure 14, l'écartement dans la première direction D1 des faces extérieures des parois 68a du pion 7 est légèrement plus petit que l'écartement dans la même direction des faces intérieures homologues 63a de l'insert 16. Par suite de ce jeu entre les faces 63a et 68a, il est possible de procéder à un léger déplacement relatif dans la première direction D1 du pion 7 par rapport à l'insert 16, ce qui participe du rattrapage de dispersion dimensionnelle longitudinale.

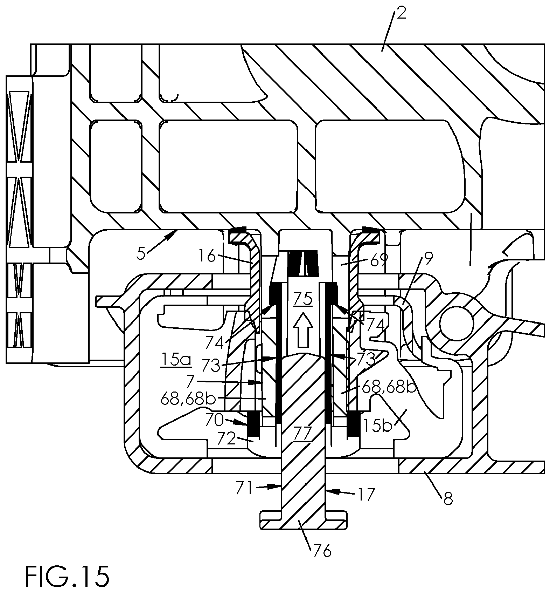

Comme représenté sur la figure 15, l'écartement dans la deuxième direction D2 des faces extérieures des parois 68b du pion 7 correspond aux tolérances de montage près à l'écartement dans la même direction des faces intérieures homologues 63b de l'insert 16, le pion 7 étant ainsi maintenu dans une position fixe par rapport à l'insert dans la deuxième direction D2.

L'invention vise aussi l'insert 16 tel qu'il a été décrit, spécialement apte et destiné à faire partie de l'assemblage 1, que cet insert 16 soit à l'état monté ou à l'état avant montage.

Dans la réalisation représentée sur les figures, où il est prévu la pièce de verrouillage 17 du pion 7, empêchant le pion 7 de se désengager de la cavité 48, et plus précisément de l'insert 16, la gaine 8 comprend la lumière basse 28, le fourreau 10 comprend le passage bas 41, la cavité 48 comporte une ouverture basse 50, et le pion 7 comporte les lumières de verrouillage latérales 69.

Comme représenté plus particulièrement sur les figures 4 et 15, la pièce de verrouillage 17 s'étend globalement dans la troisième direction D3.

Elle comporte un corps 70 et un coulisseau 71.

Le corps 70 comprend une base 72 s'étendant globalement dans le troisième plan P3.

Le corps 70 comprend également deux bras 73, allongés côte à côte, s'étendant globalement dans la troisième direction D3 et présentant une certaine capacité de déformation élastique à l'opposé de la base 72. Ces bras 73 sont pourvus de saillies de verrouillage 74 à l'opposé de la base 72.

Le corps 70 comprend également un passage central 75, s'étendant globalement dans la troisième direction D3, ménagé dans la base 72 et entre les bras 73.

Le coulisseau 71 s'étend globalement dans la troisième direction D3.

Le coulisseau 71 comprend une partie de manoeuvre 76 et une partie d'actionnement 77.

La partie de manœuvre 76 est située vers la base 72 du corps 70. Elle est accessible par la personne par l'extérieur par la personne qui doit mettre en place et verrouiller la pièce de verrouillage 17.

La partie d'actionnement 77 est située entre les bras 73 du corps 70. Elle est montée coulissant dans le passage central 75 entre une position sortie inactive et une position rentrée active où elle est disposée entre les bras 23 et les saillies de verrouillage 74, de sorte à les écarter mutuellement et empêcher qu'ils se rapprochent.

Les saillies de verrouillage 74 pénètrent alors dans les lumières de verrouillage 69 du pion 7. Et c'est ainsi que la pièce de verrouillage 17 immobilise le pion 7 de l'élément fonctionnel 2 sur l'insert 16.

Bien entendu, il est prévu des moyens d'immobilisation de de la pièce de verrouillage 17 sur l'insert 16 et des moyens de maintien du coulisseau 71 dans le corps 70 dans la position rentrée active, comme des saillies complémentaires.

L'invention vise aussi la pièce de verrouillage 17 telle qu'elle a été décrite, spécialement apte et destiné à faire partie de l'assemblage 1, que cette pièce de verrouillage 17 soit à l'état monté ou à l'état avant montage.

## Revendications

1. Assemblage (1) pour - à l'état monté - le support avec filtrage de vibrations d'un élément fonctionnel (2) - comme étant ou comprenant un ventilateur, un échangeur de chaleur, un condenseur - sur un élément structurel (3) rigide étendu dans une première direction (D1) sensiblement horizontale du corps d'un engin - comme un appareil ou un véhicule à moteur -, qui comprend deux ensembles d'assemblage (4) analogues, écartés l'un de l'autre le long de l'élément structurel (3) et de la partie basse (5) de l'élément fonctionnel (2), chaque ensemble d'assemblage (4) étant tel que :
- faisant partie et corps avec l'élément structurel (3), une gaine (8) rigide formée par un ensemble-paroi périphérique (8a) ayant une face intérieure (19) et une face extérieure (20) et formant un espace creux intérieur (21) avec une ouverture (22) située à une extrémité, s'inscrit entre une enveloppe intérieure et une enveloppe extérieure, chacune de forme générale simili-cylindrique, d'axe de première direction (D1), de segment générateur simili-droit et de courbe directrice simili-polygonale, et comprend une paroi haute (23) pourvue d'une lumière haute (24), ayant une face haute extérieure (25) et une face haute intérieure (26), s'étendant dans la première direction (D1) et dans une deuxième direction (D2) sensiblement horizontale et orthogonale à la première direction (D1), ;
- une cassette d'appui et de filtrage de vibrations (9) incluant :
∘ un fourreau extérieur rigide (10) formé par un ensemble-paroi périphérique (10a) ayant une face intérieure (32) et une face extérieure (33) et formant une zone creuse intérieure :
• s'inscrit entre une enveloppe intérieure et une enveloppe extérieure, chacune de forme générale simili-cylindrique, l'enveloppe extérieure étant complémentaire de l'enveloppe intérieure de la gaine (8) de sorte à permettre un coulissement de montage et une immobilisation en position par contact,
• est logé dans l'espace creux et assemblé rigidement à la gaine (8) moyennant un coulissement dans la première direction (D1) et des organes de blocage de fin de course (46a),
• comprend une paroi haute (36) avec une face haute extérieure (38) et une face haute intérieure (39), homologue de la paroi haute (23) de la gaine (8), pourvue d'un passage haut (37) homologue de la lumière haute (24),
∘ un élément intérieur (11), au moins pour partie élastiquement déformable, logé dans la zone creuse et porté par le fourreau (10) :
• comprend un noyau central (12) qui, en réponse à des sollicitations dans une troisième direction (D3) sensiblement verticale, inférieures à un certain plafond, est déplacé dans la zone creuse en restant écarté de la face intérieure (32) du fourreau (10), et qui inclut, d'une part, des parties déformables élastiquement (47), conformées vers l'extérieur, aptes à contribuer au filtrage et, en réponse à des sollicitations dans la troisième direction (D3) dépassant ledit certain plafond, à venir en butée contre la face intérieure (32) du fourreau (10), et, d'autre part, une cavité (48) avec une ouverture haute (49) homologue du passage haut (37),
• comprend également des ailes (15) de positionnement, support, filtrage et rattrapage des dispersions dimensionnelles entre l'élément fonctionnel (2) et l'élément structurel (3), notamment dans la première direction (D1), situées latéralement de part et d'autre du noyau (12) et déployées jusqu'au fourreau (10) auquel elles sont rigidement associés, situées le long de la première direction (D1), déformables élastiquement dans les première (D1), deuxième (D2) et troisième (D3) directions,
• l'élément fonctionnel (2) présente en partie basse (5) une face d'appui (6) et faisant corps avec elle un pion (7) saillant vers le bas dans la troisième direction (D3), le poids de l'élément fonctionnel (2) est encaissé par le noyau central (12) de l'élément intérieur (11) par l'intermédiaire de la face d'appui (6) et d'une face d'appui conjuguée (60) associée au noyau central (12), le positionnement fixe de l'élément fonctionnel (2) par rapport à l'élément intérieur (11) dans la première direction (D1) et dans la deuxième direction (D2) est assuré par un moyen de positionnement fixe du pion (7) dans la cavité (48) de l'élément intérieur (11) où il est logé, tandis que le pion (7) traverse la lumière haute (24) et le passage haut (37).

2. Assemblage (1) selon la revendication 1, dans lequel la face d'appui (6) et le moyen de positionnement se présentent comme un insert (16) de rehausse en ceinture, d'axe de troisième direction (D3), globalement rigide, ayant une face extérieure (61) coopérant avec la face intérieure (62) de la cavité (48), une face intérieure (63) délimitant un trou (64) complémentaire dans lequel pénètre le pion (7), et un bord haut formant face d'appui (60) conjuguée de la face d'appui (6) de l'élément fonctionnel (2), située plus haut que la face haute extérieure (25) de la paroi haute (23) de la gaine (8), l'insert (16) et l'élément intérieur (11) étant solidaires l'un de l'autre et immobilisés l'un par rapport à l'autre, des moyens complémentaires d'immobilisation, comme des ergots ou des dents (65), étant prévus sur l'insert (16) et l'élément intérieur (11), et dans lequel l'insert (16) de rehausse comporte une garniture déformable (67) située sur le bord haut formant siège, sur laquelle repose l'élément fonctionnel (2), et/ou une garniture déformable (67) située sur une partie au moins de la face extérieure (61) de l'insert (16).

3. Assemblage (1) selon l'une des revendications 1 et 2, qui comporte également une pièce de verrouillage (17) du pion (7) dans la troisième direction (D3), empêchant le pion (7) de se désengager de la cavité (48) de l'élément intérieur (11) où il est logé.

4. Assemblage (1) selon la revendication 3, dans lequel la gaine (8) comprend une paroi basse (27) pourvue d'une lumière basse (28), le fourreau (10) comprend une paroi basse (40) pourvue d'un passage bas (41) homologue de la lumière basse (28), la cavité (48) est ouverte de part en part avec une ouverture haute (49) et une ouverture basse (50), le pion (7) comporte des lumières de verrouillage (69) latérales, et la pièce de verrouillage (17), s'étendant globalement dans la troisième direction (D3), comporte :
- un corps (70) comprenant une base (72) s'étendant globalement dans un troisième plan (P3) orthogonal à la troisième direction (D3), deux bras (73) allongés côte à côte s'étendant globalement dans la troisième direction (D3) et présentant une certaine capacité de déformation élastique à l'opposé de la base (72) et pourvus de saillies de verrouillage (74) à l'opposé de la base (72), et un passage central (75) s'étendant globalement dans la troisième direction (D3) ménagé dans la base (72) et entre les bras (73),
- un coulisseau (71) s'étendant globalement dans la troisième direction (D3), comprenant une partie de manœuvre (76) vers la base (72) du corps (70), accessible, et une partie d'actionnement (77) entre les bras (73) du corps (70) montée coulissant dans le passage central (75) entre une position sortie inactive et une position rentrée active où elle est disposée entre les bras (73) et les saillies de verrouillage (74), de sorte à les écarter mutuellement et empêcher qu'ils se rapprochent,
- des moyens d'immobilisation de de la pièce de verrouillage (17) sur l'insert (16) ou l'élément intérieur (11) et des moyens de maintien du coulisseau (71) dans le corps (70) dans la position rentrée active, de sorte que la pièce de verrouillage (17) immobilise le pion (7) de l'élément fonctionnel (2) sur l'insert (16) ou l'élément intérieur (11) de la cassette (9) par coopération des saillies de verrouillage (74) dans les lumières de verrouillage (69).

5. Assemblage (1) selon l'une des revendications 1 à 4, dans lequel, vu dans la troisième direction (D3), l'ouverture haute (49) de la cavité (48) de l'élément intérieur (11) et le pion (7) ont, des contours situés au droit et de dimensions plus petites que le contour du passage haut (37) qui lui-même a un contour situé au droit et de dimensions plus petites que le contour de la lumière haute (24).

6. Assemblage (1) selon l'une des revendications 1 à 5, dans lequel, vue dans la troisième direction (D3), l'ouverture basse (50) de la cavité (48) de l'élément intérieur (11) a un contour situé au droit et de dimensions plus petites que le contour du passage bas (41) qui lui-même a un contour situé au droit et de dimensions plus petites que le contour de la lumière basse (28).

7. Assemblage (1) selon l'une des revendications 1 à 6, dans lequel, vues dans la troisième direction (D3), l'ouverture haute (49) et l'ouverture basse (50) de la cavité (48) de l'élément intérieur (11) ont des dimensions identiques ou voisines, le passage haut (37) et le passage bas (41) ont des dimensions identiques ou voisines, la lumière haute (24) et la lumière basse (28) des dimensions identiques ou voisines.

8. Assemblage (1) selon l'une des revendications 1 à 7, dans lequel l'ouverture haute (49), l'ouverture basse (50) de la cavité (48) de l'élément intérieur (11) et le pion (7) ont des contours de forme générale simili-rectangulaire dans la première direction (D1) et la deuxième direction (D2), et/ou la lumière haute (24), la lumière basse (28), le passage haut (37), le passage bas (41), l'insert (16), ont également des contours de forme générale simili-rectangulaire dans la première direction (D1) et la deuxième direction (D2).

9. Cassette d'appui et de filtrage de vibrations (9) faisant partie d'un assemblage (1) selon l'une des revendications 1 à 8, l'assemblage comprend deux ensembles d'assemblage (4) analogues, écartés l'un de l'autre le long de l'élément structurel (3) et de la partie basse (5) de l'élément fonctionnel (2) et l'élément intérieur
- comprend une paroi haute (36) avec une face haute extérieure (38) et une face haute intérieure (39), homologue de la paroi haute (23) de la gaine (8), pourvue d'un passage haut (37) homologue de la lumière haute (24),
∘ un élément intérieur (11), au moins pour partie élastiquement déformable, logé dans la zone creuse et porté par le fourreau (10) :
- comprend un noyau central (12) qui, en réponse à des sollicitations dans une troisième direction (D3) sensiblement verticale, inférieures à un certain plafond, est déplacé dans la zone creuse en restant écarté de la face intérieure (32) du fourreau (10), et qui inclut, d'une part, des parties déformables élastiquement (47), conformées vers l'extérieur, aptes à contribuer au filtrage et, en réponse à des sollicitations dans la troisième direction (D3) dépassant ledit certain plafond, à venir en butée contre la face intérieure (32) du fourreau (10), et, d'autre part, une cavité (48) avec une ouverture haute (49) homologue du passage haut (37),
- comprend également des ailes (15) de positionnement, support, filtrage et rattrapage des dispersions dimensionnelles entre l'élément fonctionnel (2) et l'élément structurel (3), notamment dans la première direction (D1), situées latéralement de part et d'autre du noyau (12) et déployées jusqu'au fourreau (10) auquel elles sont rigidement associés, situées le long de la première direction (D1), déformables élastiquement dans les première (D1), deuxième (D2) et troisième (D3) directions,
- l'élément fonctionnel (2) présente en partie basse (5) une face d'appui (6) et faisant corps avec elle un pion (7) saillant vers le bas dans la troisième direction (D3), le poids de l'élément fonctionnel (2) est encaissé par le noyau central (12) de l'élément intérieur (11) par l'intermédiaire de la face d'appui (6) et d'une face d'appui conjuguée (60) associée au noyau central (12), le positionnement fixe de l'élément fonctionnel (2) par rapport à l'élément intérieur (11) dans la première direction (D1) et dans la deuxième direction (D2) est assuré par un moyen de positionnement fixe du pion (7) dans la cavité (48) de l'élément intérieur (11) où il est logé, tandis que le pion (7) traverse la lumière haute (24) et le passage haut (37),
incluant :
- un fourreau extérieur rigide (10) formé par un ensemble-paroi périphérique (10a) ayant une face intérieure (32) et une face extérieure (33) et formant une zone creuse intérieure, s'inscrit entre une enveloppe intérieure et une enveloppe extérieure, chacune de forme générale simili-cylindrique, et comprend une paroi haute (36) avec une face haute extérieure (38) et une face haute intérieure (39),
- un élément intérieur (11), au moins pour partie élastiquement déformable, logé dans la zone creuse et porté par le fourreau (10) :
∘ comprend un noyau central (12) qui, en réponse à des sollicitations dans la troisième direction (D3) inférieures à un certain plafond, est déplacé dans la zone creuse en restant écarté de la face intérieure (32) du fourreau (10), et qui inclut, d'une part, des parties déformables élastiquement (47), conformées vers l'extérieur, aptes à contribuer au filtrage et, en réponse à des sollicitations dans la troisième direction (D3) dépassant ledit certain plafond, à venir en butée, et, d'autre part, une cavité (48) avec une ouverture haute (49),
∘ comprend également des ailes (15) de positionnement, support, filtrage et rattrapage des dispersions dimensionnelles entre l'élément fonctionnel (2) et l'élément structurel (3), notamment dans la première direction (D1), situées latéralement de part et d'autre du noyau (12) et déployées jusqu'au fourreau (10) auquel elles sont rigidement associées, situées le long de la première direction (D1), déformables élastiquement dans les première (D1), deuxième (D2) et troisième (D3) directions.

10. Cassette d'appui et de filtrage de vibrations (9) selon la revendication 9, dans laquelle le fourreau extérieur (10) comporte sur sa face extérieure (33) des parties saillantes localisées, saillant vers l'extérieur, plus spécialement des parties saillantes localisées s'étendant dans la première direction (D1), propres à un coulissement de montage avec ajustement de la cassette (9) par rapport à la gaine (8) de l'élément structurel (3), et dans laquelle le fourreau extérieur (10) comporte des organes de blocage de fin de course (46a), dans la première direction (D1), par rapport à la gaine (8) de l'élément structurel (3), sous la forme de redans saillants localisés, saillant vers l'extérieur de la face extérieure (33) disposés globalement dans un premier plan (P1) orthogonal à la première direction (D1).

11. Cassette d'appui et de filtrage de vibrations (9) selon l'une des revendications 9 et 10, dans laquelle le noyau central (12) de l'élément intérieur (11) comporte :
- une âme rigide (13) ayant :
∘ une partie centrale creuse (55) de sorte à former et à limiter la cavité (48) de l'élément intérieur (11) et son ouverture haute (49), et
∘ deux ailes (15) disposées de part et d'autre de la partie centrale creuse (55) et s'étendant dans la première direction (D1) comportant deux faces d'extrémité,
- une garniture périphérique (14), élastiquement déformable, comportant les parties déformables élastiquement (47) conformées vers l'extérieur, recouvrant l'âme rigide (13), à l'exception d'une partie au moins de ses faces d'extrémité.

12. Cassette d'appui et de filtrage de vibrations (9) selon l'une des revendications 9 à 11, dans laquelle les ailes (15) de positionnement, support, filtrage et rattrapage des dispersions dimensionnelles de l'élément intérieur (11) sont attenantes aux faces latérales (51) du noyau (12) et soit se déploient de sorte à avoir une projection orthogonale substantielle sur un troisième plan (P3) orthogonal à la troisième direction (D3) soit se déploient dans un plan incliné sur le troisième plan (P3) de sorte à être rigidement associées aux deux parois latérales (44) du fourreau (10).

13. Cassette d'appui et de filtrage de vibrations (9) selon l'une des revendications 9 à 12, dans laquelle, vu dans la troisième direction (D3), l'ouverture haute (49) de la cavité (48) de l'élément intérieur (11) a un contour situé au droit et de dimensions plus petites que le contour du passage haut (37) et/ou l'ouverture basse (50) de la cavité (48) a un contour situé au droit et de dimensions plus petites que le contour du passage bas (41).

14. Insert (16) de rehausse faisant partie d'un assemblage (1) selon l'une des revendications 1 à 8, l'assemblage comprend deux ensembles d'assemblage (4) analogues, écartés l'un de l'autre le long de l'élément structurel (3) et de la partie basse (5) de l'élément fonctionnel (2) et l'élément intérieur :
- comprend une paroi haute (36) avec une face haute extérieure (38) et une face haute intérieure (39), homologue de la paroi haute (23) de la gaine (8), pourvue d'un passage haut (37) homologue de la lumière haute (24),
∘ un élément intérieur (11), au moins pour partie élastiquement déformable, logé dans la zone creuse et porté par le fourreau (10) :
- comprend un noyau central (12) qui, en réponse à des sollicitations dans une troisième direction (D3) sensiblement verticale, inférieures à un certain plafond, est déplacé dans la zone creuse en restant écarté de la face intérieure (32) du fourreau (10), et qui inclut, d'une part, des parties déformables élastiquement (47), conformées vers l'extérieur, aptes à contribuer au filtrage et, en réponse à des sollicitations dans la troisième direction (D3) dépassant ledit certain plafond, à venir en butée contre la face intérieure (32) du fourreau (10), et, d'autre part, une cavité (48) avec une ouverture haute (49) homologue du passage haut (37),
- comprend également des ailes (15) de positionnement, support, filtrage et rattrapage des dispersions dimensionnelles entre l'élément fonctionnel (2) et l'élément structurel (3), notamment dans la première direction (D1), situées latéralement de part et d'autre du noyau (12) et déployées jusqu'au fourreau (10) auquel elles sont rigidement associés, situées le long de la première direction (D1), déformables élastiquement dans les première (D1), deuxième (D2) et troisième (D3) directions,
- l'élément fonctionnel (2) présente en partie basse (5) une face d'appui (6) et faisant corps avec elle un pion (7) saillant vers le bas dans la troisième direction (D3), le poids de l'élément fonctionnel (2) est encaissé par le noyau central (12) de l'élément intérieur (11) par l'intermédiaire de la face d'appui (6) et d'une face d'appui conjuguée (60) associée au noyau central (12), le positionnement fixe de l'élément fonctionnel (2) par rapport à l'élément intérieur (11) dans la première direction (D1) et dans la deuxième direction (D2) est assuré par un moyen de positionnement fixe du pion (7) dans la cavité (48) de l'élément intérieur (11) où il est logé, tandis que le pion (7) traverse la lumière haute (24) et le passage haut (37),
tel que, en forme de ceinture, d'axe de troisième direction (D3), globalement rigide, il présente une face extérieure (61), une face intérieure (62) délimitant un trou, un bord haut formant face d'appui (60), et des moyens d'immobilisation, comme des ergots ou des dents (65), et il comporte une garniture déformable (67) située sur le bord haut formant siège et/ou une garniture déformable (67) située sur une partie au moins de sa face extérieure (61).

15. Pièce de verrouillage (17) faisant partie d'un assemblage (1) selon l'une des revendications 1 à 8, l'assemblage comprend deux ensembles d'assemblage (4) analogues, écartés l'un de l'autre le long de l'élément structurel (3) et de la partie basse (5) de l'élément fonctionnel (2) et l'élément intérieur :
- comprend une paroi haute (36) avec une face haute extérieure (38) et une face haute intérieure (39), homologue de la paroi haute (23) de la gaine (8), pourvue d'un passage haut (37) homologue de la lumière haute (24),
∘ un élément intérieur (11), au moins pour partie élastiquement déformable, logé dans la zone creuse et porté par le fourreau (10) :
- comprend un noyau central (12) qui, en réponse à des sollicitations dans une troisième direction (D3) sensiblement verticale, inférieures à un certain plafond, est déplacé dans la zone creuse en restant écarté de la face intérieure (32) du fourreau (10), et qui inclut, d'une part, des parties déformables élastiquement (47), conformées vers l'extérieur, aptes à contribuer au filtrage et, en réponse à des sollicitations dans la troisième direction (D3) dépassant ledit certain plafond, à venir en butée contre la face intérieure (32) du fourreau (10), et, d'autre part, une cavité (48) avec une ouverture haute (49) homologue du passage haut (37),
- comprend également des ailes (15) de positionnement, support, filtrage et rattrapage des dispersions dimensionnelles entre l'élément fonctionnel (2) et l'élément structurel (3), notamment dans la première direction (D1), situées latéralement de part et d'autre du noyau (12) et déployées jusqu'au fourreau (10) auquel elles sont rigidement associés, situées le long de la première direction (D1), déformables élastiquement dans les première (D1), deuxième (D2) et troisième (D3) directions,
- l'élément fonctionnel (2) présente en partie basse (5) une face d'appui (6) et faisant corps avec elle un pion (7) saillant vers le bas dans la troisième direction (D3), le poids de l'élément fonctionnel (2) est encaissé par le noyau central (12) de l'élément intérieur (11) par l'intermédiaire de la face d'appui (6) et d'une face d'appui conjuguée (60) associée au noyau central (12), le positionnement fixe de l'élément fonctionnel (2) par rapport à l'élément intérieur (11) dans la première direction (D1) et dans la deuxième direction (D2) est assuré par un moyen de positionnement fixe du pion (7) dans la cavité (48) de l'élément intérieur (11) où il est logé, tandis que le pion (7) traverse la lumière haute (24) et le passage haut (37),
qui s'étend globalement dans la troisième direction (D3), et comporte :
- un corps (70) comprenant une base (72) s'étendant globalement dans un troisième plan (P3) orthogonal à la troisième direction (D3), deux bras (73) allongés côte à côte s'étendant globalement dans la troisième direction (D3) et présentant une certaine capacité de déformation élastique à l'opposé de la base (72) et pourvus de saillies de verrouillage (74) à l'opposé de la base (72), et un passage central (75) s'étendant globalement dans la troisième direction (D3) ménagé dans la base (72) et entre les bras (73),
- un coulisseau (71) s'étendant globalement dans la troisième direction (D3), comprenant une partie de manœuvre (76) vers la base (72) du corps (70), accessible, et une partie d'actionnement (77) entre les bras (73) du corps (70) montée coulissant dans le passage central (75) entre une position sortie inactive et une position rentrée active où elle est disposée entre les bras (73) et les saillies de verrouillage (74), de sorte à les écarter mutuellement et empêcher qu'ils se rapprochent,
- des moyens d'immobilisation.

## Patentansprüche

1. Anordnung (1), die im montierten Zustand zur schwingungsdämpfenden Abstützung eines Funktionselements (2)
- wie z.B. eines Ventilators, Wärmetauschers, Kondensators oder Baugruppen mit diesen Elementen - an einem starren Strukturelement (3) dient, welches sich in einer ersten, im wesentlichen horizontalen Richtung (D1) des Körpers einer Maschine - wie z.B. eines Geräts oder Kraftfahrzeuges - erstreckt, die zwei gleichartige Montagebaugruppen (4) umfasst, welche entlang des Strukturelements (3) und des unteren Teils (5) des Funktionselements (2) zueinander beabstandet sind, wobei jede Montagebaugruppe (4) so beschaffen ist, dass:
- sie Teil des Strukturelements (3) ist und mit diesem eine Einheit bildet, wobei eine starre Hülle (8), die durch eine Umfangswandanordnung (8a) mit einer Innenseite (19) und einer Außenseite (20) gebildet wird und einen inneren Hohlraum (21) mit einer Öffnung (22) an einem Ende bildet, von einem Innen- und einem Außenmantel abgegrenzt wird, mit jeweils generell simulierter zylindrischer Form, einem Achsenverlauf in der ersten Richtung (D1), einem simulierten geraden Erzeugungssegment und einer simulierten polygonalen Leitkurve, und eine obere Wand (23) umfasst, die mit einer oberen Öffnung (24) versehen ist, und eine obere Außenfläche (25) und eine obere Innenfläche (26) aufweist, die sich in der ersten Richtung (D1) sowie in einer zweiten Richtung (D2), im Wesentlichen horizontal und rechtwinklig zur ersten Richtung (D1) verlaufenden Richtung erstrecken;
- eine stützende, schwingungsdämpfende Kassette (9) mit:
o einer starren äußeren Hülse (10), die durch eine Umfangswandanordnung (10a) mit einer Innenfläche (32) und einer Außenfläche (33) gebildet wird und einen inneren hohlen Bereich bildet:
• von einem Innenmantel und einem Außenmantel abgegrenzt wird, die jeweils eine generell simulierte zylindrische Form haben, wobei der Außenmantel komplementär zum Innenmantel der Hülle (8) ist, um ein Gleiten sowie durch Kontakt eine Feststellung des Aufbaus zu ermöglichen,
• in dem Hohlraum sitzt und durch Verschiebung in der ersten Richtung (D1) und Endlagenverriegelungselemente (46a) starr mit der Hülle (8) verbunden ist,
• eine obere Wand (36) mit einer oberen Außenfläche (38) und einer oberen Innenfläche (39) als Gegenstück zur oberen Wand (23) der Hülle (8) umfasst und als Gegenstück zur oberen Öffnung (24) mit einem oberen Durchgang (37) versehen ist,
o ein Innenelement (11), das zumindest teilweise elastisch verformbar ist, im hohlen Bereich sitzt, von der Hülse (10) getragen wird und:
• einen zentralen Kern (12) umfasst, der als Reaktion auf die Beanspruchungen unterhalb einer bestimmten Obergrenze in einer dritten, im Wesentlichen vertikalen Richtung (D3) in den hohlen Bereich verschoben wird, wobei er von der Innenfläche (32) der Hülse (10) beabstandet bleibt, der einerseits elastisch verformbare, nach außen ausgebildete Teile (47) umfasst, die zur Filterung beitragen, und als Reaktion auf Beanspruchungen oberhalb dieser Obergrenze in der dritten Richtung (D3) gegen die Innenfläche (32) der Hülse (10) in Anschlag kommen kann, und andererseits einen Hohlraum (48) mit einer oberen Öffnung (49) als Gegenstück zum oberen Durchgang (37),
• außerdem Flügel (15) umfasst zum Positionieren, Stützen, Schwingungsdämpfen und Ausgleichen von Maßabweichungen zwischen dem Funktionselement (2) und dem Strukturelement (3), insbesondere in der ersten Richtung (D1), wobei sie seitlich zu beiden Seiten des Kerns (12) angeordnet sind und sich bis zur Hülse (10) erstrecken, mit der sie starr verbunden sind, wobei sie entlang der ersten Richtung (D1) angeordnet und in der ersten (D1), zweiten (D2) und dritten (D3) Richtung elastisch verformbar sind,
• das Funktionselement (2) im unteren Teil (5) eine Auflagefläche (6) aufweist, wobei ein nach unten, in der dritten Richtung (D3) vorspringender Zapfen (7) eine Einheit mit ihm bildet, das Gewicht des Funktionselements (2) vom zentralen Kern (12) des inneren Elements (11) über die Auflagefläche (6) und eine dazugehörige passende Auflagefläche (60) am zentralen Kern (12) aufgenommen wird, die feste Positionierung des Funktionselements (2) in Bezug auf das innere Element (11) in der ersten Richtung (D1) und in der zweiten Richtung (D2) durch ein feststehendes Positionierungsmittel des Zapfens (7) im Hohlraum (48) des inneren Elements (11), in dem es aufgenommen ist, gewährleistet wird, während der Zapfen (7) durch die obere Öffnung (24) und den oberen Durchgang (37) führt.

2. Anordnung (1) nach Anspruch 1, in der die Auflagefläche (6) und das Positionierungsmittel als riemenförmiger, erhöhender, generell starrer Einsatz (16) mit einem Achsenverlauf in der dritten Richtung (D3) ausgebildet ist, mit einer mit der Innenfläche (62) des Hohlraums (48) zusammenwirkenden Außenfläche (61), einer Innenfläche (63), die ein komplementäres Loch (64) abgrenzt, in das der Zapfen (7) eingeschoben wird, und einem oberen Rand, der eine Auflagefläche (60) als Gegenstück zur Auflagefläche (6) des Funktionselements (2) bildet, die höher gelegen ist als die obere Außenfläche (25) der oberen Wand (23) der Hülle (8), wobei der Einsatz (16) und das innere Element (11) fest miteinander verbunden und relativ zueinander festgestellt sind, wobei komplementäre Feststellmittel, wie Stifte oder Zähne (65), auf dem Einsatz (16) und dem inneren Element (11) vorgesehen sind, und in der der erhöhende Einsatz (16) am oberen, den Sitz bildenden Rand eine verformbare Dichtung (67) umfasst, auf der das Funktionselement (2) aufliegt, und/oder eine verformbare Dichtung (67) auf zumindest einem Teil der Außenfläche (61) des Einsatzes (16).

3. Anordnung (1) nach einem der Ansprüche 1 und 2, die darüber hinaus ein Verriegelungselement (17) des Zapfens (7) in der dritten Richtung (D3) umfasst, das den Zapfen (7) daran hindert, aus dem Hohlraum (48) des inneren Elements (11), in dem er aufgenommen ist, auszurasten.

4. Anordnung (1) nach Anspruch 3, in der die Hülle (8) eine mit einer Bodenöffnung (28) versehene Bodenwand (27) umfasst, die Hülse (10) eine Bodenwand (40) umfasst, die mit einem Bodendurchgang (41) als Gegenstück zur Bodenöffnung (28) versehen ist, und der Hohlraum (48) zu beiden Seiten durch eine obere Öffnung (49) und eine untere Öffnung (50) geöffnet ist und der Zapfen (7) seitliche Verriegelungsöffnungen (69) umfasst, wobei das sich generell in die dritte Richtung (D3) erstreckende Verriegelungselement (17) folgendes umfasst:
- einen Körper (70) mit einer Basis (72), die sich generell in einer dritten Ebene (P3) rechtwinklig zur dritten Richtung (D3) erstreckt, zwei langgestreckten, nebeneinander liegenden Armen (73), die sich generell in der dritten Richtung (D3) erstrecken, gegenüber der Basis (72) eine gewisse elastische Verformbarkeit aufweisen und gegenüber der Basis (72) mit Verriegelungsvorsprüngen (74) versehen sind, und einem zentralen Durchgang (75), der sich generell in der dritten Richtung (D3) in der Basis (72) und zwischen den Armen (73) erstreckt,
- einen Schieber (71), der sich generell in der dritten Richtung (D3) erstreckt, mit einem zugänglichen Bewegungsbereich (76) in Richtung der Basis (72) des Körpers (70), und einem Betätigungsbereich (77) zwischen den Armen (73) des Körpers (70), der im zentralen Durchgang zwischen einer inaktiven ausgefahrenen Position und einer aktiven eingefahrenen Position, in der er zwischen den Armen (73) und den Verriegelungsvorsprüngen (74) so angeordnet ist (75), dass er sie auseinander bewegen und ihre Annäherung verhindern kann, gleitend montiert ist,
- Mittel zum Feststellen des Verriegelungsteils (17) auf dem Einsatz (16) oder dem inneren Element (11) und Mittel zum Halten des Schiebers (71) im Körper (70) in der aktiven eingefahrenen Position, so dass das Verriegelungsteil (17) den Zapfen (7) des Funktionselements (2) auf dem Einsatz (16) oder das innere Element (11) der Kassette (9) durch Zusammenwirken der Verriegelungsvorsprünge (74) und den Verriegelungsöffnungen (69) feststellt.

5. Anordnung (1) nach einem der Ansprüche 1 bis 4, in der in der dritten Richtung (D3) gesehen die obere Öffnung (49) des Hohlraums (48) des inneren Elements (11) und der Zapfen (7) rechtwinklig verlaufende Konturen und kleinere Abmessungen aufweisen als die Kontur des oberen Durchgangs (37), der seinerseits eine rechtwinklig verlaufende Kontur und kleinere Abmessungen als die Kontur der oberen Öffnung (24) hat.

6. Anordnung (1) nach einem der Ansprüche 1 bis 5, in der in der dritten Richtung (D3) gesehen die untere Öffnung (50) des Hohlraums (48) des inneren Elements (11) eine Kontur aufweist, die rechtwinklig verläuft und kleinere Abmessungen hat als die Kontur des Bodendurchgangs (41), der seinerseits eine rechtwinklig verlaufende Kontur und kleinere Abmessungen als die Kontur der Bodenöffnung (28) hat.

7. Anordnung (1) nach einem der Ansprüche 1 bis 6, in der in der dritten Richtung (D3) gesehen die obere Öffnung (49) und die untere Öffnung (50) des Hohlraums (48) des inneren Elements (11) gleiche oder ähnliche Abmessungen haben, der obere Durchgang (37) und der Bodendurchgang (41) gleiche oder ähnliche Abmessungen haben und die obere Öffnung (24) und die Bodenöffnung (28) gleiche oder ähnliche Abmessungen haben.

8. Anordnung (1) nach einem der Ansprüche 1 bis 7, in der die obere Öffnung (49), die untere Öffnung (50) des Hohlraums (48) des inneren Elements (11) und der Zapfen (7) in der ersten Richtung (D1) und der zweiten Richtung (D2) Konturen in einer generell simulierten rechteckigen Form aufweisen, und/oder die obere Öffnung (24), die Bodenöffnung (28), der obere Durchgang (37), der Bodendurchgang (41) und der Einsatz (16) in der ersten Richtung (D1) und der zweiten Richtung (D2) ebenfalls Konturen in einer generell simulierten rechteckigen Form aufweisen.

9. Stützende, schwingungsdämpfende Kassette (9), die Teil einer Anordnung (1) nach einem der Ansprüche 1 bis 8 ist, wobei die Anordnung zwei gleichartige Montagebaugruppen (4) umfasst, die entlang des Strukturelements (3) und des unteren Teils (5) des Funktionselements (2) zueinander beabstandet sind und das innere Element:
- eine obere Wand (36) umfasst mit einer oberen Außenfläche (38) und einer oberen Innenfläche (39) als Gegenstück zur oberen Wand (23) der Hülle (8), die mit einem oberen Durchgang (37) als Gegenstück zur oberen Öffnung (24) versehen ist;
O ein Innenelement (11), das zumindest teilweise elastisch verformbar ist, im hohlen Bereich sitzt, von der Hülse (10) getragen wird und:
- einen zentralen Kern (12) umfasst, der als Reaktion auf die Beanspruchungen in einer dritten, im Wesentlichen vertikalen Richtung (D3) unterhalb einer bestimmten Obergrenze in den hohlen Bereich verschoben wird, wobei er von der Innenfläche (32) der Hülse (10) beabstandet bleibt, und einerseits elastisch verformbare, nach außen ausgebildete Teile (47) umfasst, die zur Schwingungsdämpfung beitragen, und als Reaktion auf die Beanspruchungen oberhalb dieser Obergrenze in der dritten Richtung (D3) gegen die Innenfläche (32) der Hülse (10) in Anschlag kommen kann, und andererseits einen Hohlraum (48) mit einer oberen Öffnung (49) als Gegenstück zum oberen Durchgang (37), - umfasst außerdem Flügel (15) zum Positionieren, Stützen, Schwingungsdämpfen und Ausgleichen von Maßabweichungen zwischen dem Funktionselement (2) und dem Strukturelement (3), insbesondere in der ersten Richtung (D1), wobei sie seitlich zu beiden Seiten des Kerns (12) angeordnet sind und sich bis zur Hülse (10) erstrecken, mit der sie starr verbunden sind, wobei sie entlang der ersten Richtung (D1) angeordnet und in der ersten Richtung (D1), zweiten Richtung (D2) und dritten Richtung (D3) elastisch verformbar sind,
- das Funktionselement (2) weist im unteren Teil (5) eine Auflagefläche (6) auf, wobei ein nach unten, in der dritten Richtung (D3) vorspringender Zapfen (7) eine Einheit mit ihm bildet, das Gewicht des Funktionselements (2) vom zentralen Kern (12) des inneren Elements (11) durch die Auflagefläche (6) und eine dazugehörige passende Auflagefläche (60) am zentralen Kern (12) aufgenommen wird, die feste Positionierung des Funktionselements (2) in Bezug auf das innere Element (11) in der ersten Richtung (D1) und in der zweiten Richtung (D2) gewährleistet wird durch ein feststehendes Positionierungsmittel des Zapfens (7) im Hohlraum (48) des inneren Elements (11), in dem es aufgenommen ist, während der Zapfen (7) durch die obere Öffnung (24) und den oberen Durchgang (37) führt,
die folgendes beinhaltet:
- eine starre äußere Hülse (10), die durch eine Umfangswandanordnung (10a) mit einer Innenfläche (32) und einer Außenfläche (33) gebildet wird und einen inneren hohlen Bereich bildet, von einem Innenmantel und einem Außenmantel mit jeweils generell simulierter zylindrischer Form abgegrenzt wird und eine obere Wand (36) mit einer oberen Außenfläche (38) und einer oberen Innenfläche (39) umfasst, - ein zumindest teilweise elastisch verformbares inneres Element (11), das in dem hohlen Bereich sitzt, von der Hülse (10) getragen wird und:
o einen zentralen Kern (12) umfasst, der als Reaktion auf die Beanspruchungen in einer dritten Richtung (D3) unterhalb einer bestimmten Obergrenze in den hohlen Bereich verschoben wird, wobei er von der Innenfläche (32) der Hülse (10) beabstandet bleibt, und der einerseits elastisch verformbare, nach außen ausgebildete Teile (47) umfasst, die zur Schwingungsdämpfung beitragen, und als Reaktion auf die Beanspruchungen in der dritten Richtung (D3), die diese bestimmte Obergrenze überschreiten, in Anschlag kommen kann, und andererseits einen Hohlraum (48) mit einer oberen Öffnung (49) umfasst,
o außerdem Flügel (15) umfasst zum Positionieren, Stützen, Schwingungsdämpfen und Ausgleichen von Maßabweichungen zwischen dem Funktionselement (2) und dem Strukturelement (3), insbesondere in der ersten Richtung (D1), wobei sie seitlich zu beiden Seiten des Kerns (12) angeordnet sind und sich bis zur Hülse (10) erstrecken, mit der sie starr verbunden sind, wobei sie entlang der ersten Richtung (D1) angeordnet und in der ersten Richtung (D1), zweiten Richtung (D2) und dritten Richtung (D3) elastisch verformbar sind,

10. Stützende, schwingungsdämpfende Kassette (9) nach Anspruch 9, in welcher die äußere Hülse (10) an ihrer Außenfläche (33) nach außen vorstehende, örtlich begrenzte Partien umfasst, und insbesondere örtlich begrenzte vorspringende Partien, die sich in die erste Richtung (D1) erstrecken wie ein gleitender Aufbau mit Anpassung der Kassette (9) an die Hülle (8) des Strukturelements (3), in welcher die äußere Hülse (10) in der ersten Richtung (D1) bezogen auf die Hülle (8) des Strukturelements (3) Endlagenverriegelungselemente (46a) in Form von örtlich begrenzten, von der Außenfläche (33) nach außen vorstehenden Vorsprüngen aufweist, die generell in einer ersten Ebene (P1) rechtwinklig zur ersten Richtung (D1) angeordnet sind.

11. Stützende, schwingungsdämpfende Kassette (9) nach einem der Ansprüche 9 bis 10, in welcher der zentrale Kern (12) des Innenelements (11) folgendes umfasst:
- einem starren Kern (13) mit:
o einem hohlen Mittelteil (55), um den Hohlraum (48) des inneren Elements (11) und dessen obere Öffnung (49) zu bilden und zu begrenzen, und
o zwei Flügel (15), die zu beiden Seiten des hohlen Mittelteils (55) angeordnet sind, sich in der ersten Richtung (D1) erstrecken und zwei Endflächen aufweisen,
- eine umlaufende, elastisch verformbare Dichtung (14) mit nach außen ausgebildeten, elastisch verformbaren Teilen (47), die den starren Kern (13) bis auf mindestens einen Teil seiner Endflächen bedecken.

12. Stützende, schwingungsdämpfende Kassette (9) nach einem der Ansprüche 9 bis 11, in welcher die Flügel (15) zum Positionieren, Stützen, Schwingungsdämpfen und Ausgleichen der Maßabweichungen des inneren Elements (11) an die Seitenflächen (51) des Kerns (12) angrenzen und sich entweder so erstrecken, dass sie eine im Wesentlichen Orthogonalprojektion auf eine dritte Ebene (P3) rechtwinklig zur dritten Richtung (D3) bilden, oder sie sich in einer zur dritten Ebene (P3) geneigten Ebene erstrecken, so dass sie starr mit den beiden Seitenwänden (44) der Hülse (10) verbunden sind.

13. Stützende, schwingungsdämpfende Kassette (9) nach einem der Ansprüche 9 bis 12, in der in der dritten Richtung (D3) gesehen die obere Öffnung (49) des Hohlraums (48) des inneren Elements (11) eine Kontur aufweist, die rechtwinklig verläuft und kleinere Abmessungen hat als die Kontur des oberen Durchgangs (37) und/oder die untere Öffnung (50) des Hohlraums (48) eine rechtwinklig verlaufende Kontur und kleinere Abmessungen als die Kontur des Bodendurchgangs (41) hat.

14. Erhöhender Einsatz (16), der Teil einer Anordnung (1) nach einem der Ansprüche 1 bis 8 ist, wobei die Anordnung zwei gleichartige Montagebaugruppen (4) umfasst, die entlang des Strukturelements (3) und des unteren Teils (5) des Funktionselements (2) zueinander beabstandet sind und das innere Element:
- eine obere Wand (36) umfasst mit einer oberen Außenfläche (38) und einer oberen Innenfläche (39) als Gegenstück zur oberen Wand (23) der Hülle (8), die mit einem oberen Durchgang (37) als Gegenstück zur oberen Öffnung (24) versehen ist;
o ein Innenelement (11), das zumindest teilweise elastisch verformbar ist, im hohlen Bereich sitzt, von der Hülse (10) getragen wird und:
- einen zentralen Kern (12) umfasst, der als Reaktion auf die Beanspruchungen in einer dritten, im Wesentlichen vertikalen Richtung (D3) unterhalb einer bestimmten Obergrenze in den hohlen Bereich verschoben wird, wobei er von der Innenfläche (32) der Hülse (10) beabstandet bleibt, und einerseits elastisch verformbare, nach außen ausgebildete Teile (47) umfasst, die zur Schwingungsdämpfung beitragen, und als Reaktion auf die Beanspruchungen oberhalb dieser Obergrenze in der dritten Richtung (D3) gegen die Innenfläche (32) der Hülse (10) in Anschlag kommen kann, und andererseits einen Hohlraum (48) mit einer oberen Öffnung (49) als Gegenstück zum oberen Durchgang (37),
- außerdem Flügel (15) umfasst zum Positionieren, Stützen, Schwingungsdämpfen und Ausgleichen von Maßabweichungen zwischen dem Funktionselement (2) und dem Strukturelement (3), insbesondere in der ersten Richtung (D1), wobei sie seitlich zu beiden Seiten des Kerns (12) angeordnet sind und sich bis zur Hülse (10) erstrecken, mit der sie starr verbunden sind, wobei sie entlang der ersten Richtung (D1) angeordnet und in der ersten Richtung (D1), zweiten Richtung (D2) und dritten Richtung (D3) elastisch verformbar sind,
- das Funktionselement (2) weist im unteren Teil (5) eine Auflagefläche (6) auf, wobei ein nach unten, in der dritten Richtung (D3) vorspringender Zapfen (7) eine Einheit mit ihm bildet, das Gewicht des Funktionselements (2) vom zentralen Kern (12) des inneren Elements (11) durch die Auflagefläche (6) und eine dazugehörige passende Auflagefläche (60) am zentralen Kern (12) aufgenommen wird, die feste Positionierung des Funktionselements (2) in Bezug auf das innere Element (11) in der ersten Richtung (D1) und in der zweiten Richtung (D2) gewährleistet wird durch ein feststehendes Positionierungsmittel des Zapfens (7) im Hohlraum (48) des inneren Elements (11), in dem es aufgenommen ist, während der Zapfen (7) durch die obere Öffnung (24) und den oberen Durchgang (37) führt,
so dass er in Form eines generell starren Riemens mit einem Achsenverlauf in dritter Richtung (D3) eine Außenfläche (61) und eine Innenfläche (62) aufweist, die ein Loch abgrenzen, wobei ein oberer Rand eine Auflagefläche (60) bildet, und Feststellmittel, wie z.B. Stifte oder Zähne (65), und er eine verformbaren Dichtung (67) am oberen, den Sitz bildenden Rand umfasst und/oder eine verformbare Dichtung (67) auf zumindest einem Teil seiner Außenfläche (61) .

15. Verriegelungselement (17), das Teil einer Anordnung (1) nach einem der Ansprüche 1 bis 8 ist, wobei die Anordnung zwei gleichartige Montagebaugruppen (4) umfasst, die entlang des Strukturelements (3) und des unteren Teils (5) des Funktionselements (2) zueinander beabstandet sind und das innere Element:
- eine obere Wand (36) umfasst mit einer oberen Außenfläche (38) und einer oberen Innenfläche (39) als Gegenstück zur oberen Wand (23) der Hülle (8), die mit einem oberen Durchgang (37) als Gegenstück zur oberen Öffnung (24) versehen ist;
O einem Innenelement (11), das zumindest teilweise elastisch verformbar ist, im hohlen Bereich sitzt, von der Hülse (10) getragen wird und:
- einen zentralen Kern (12) umfasst, der als Reaktion auf die Beanspruchungen in einer dritten, im Wesentlichen vertikalen Richtung (D3) unterhalb einer bestimmten Obergrenze in den hohlen Bereich verschoben wird, wobei er von der Innenfläche (32) der Hülse (10) beabstandet bleibt, und einerseits elastisch verformbare, nach außen ausgebildete Teile (47) umfasst, die zur Schwingungsdämpfung beitragen, und als Reaktion auf die Beanspruchungen oberhalb dieser Obergrenze in der dritten Richtung (D3) gegen die Innenfläche (32) der Hülse (10) in Anschlag kommen kann, und andererseits einen Hohlraum (48) mit einer oberen Öffnung (49) als Gegenstück zum oberen Durchgang (37), - umfasst außerdem Flügel (15) zum Positionieren, Stützen, Schwingungsdämpfen und Ausgleichen von Maßabweichungen zwischen dem Funktionselement (2) und dem Strukturelement (3), insbesondere in der ersten Richtung (D1), wobei sie seitlich zu beiden Seiten des Kerns (12) angeordnet sind und sich bis zur Hülse (10) erstrecken, mit der sie starr verbunden sind, wobei sie entlang der ersten Richtung (D1) angeordnet und in der ersten Richtung (D1), zweiten Richtung (D2) und dritten Richtung (D3) elastisch verformbar sind,
- das Funktionselement (2) weist im unteren Teil (5) eine Auflagefläche (6) auf, wobei ein nach unten, in der dritten Richtung (D3) vorspringender Zapfen (7) eine Einheit mit ihm bildet, das Gewicht des Funktionselements (2) vom zentralen Kern (12) des inneren Elements (11) durch die Auflagefläche (6) und eine dazugehörige passende Auflagefläche (60) am zentralen Kern (12) aufgenommen wird, die feste Positionierung des Funktionselements (2) in Bezug auf das innere Element (11) in der ersten Richtung (D1) und in der zweiten Richtung (D2) gewährleistet wird durch ein feststehendes Positionierungsmittel des Zapfens (7) im Hohlraum (48) des inneren Elements (11), in dem es aufgenommen ist, während der Zapfen (7) durch die obere Öffnung (24) und den oberen Durchgang (37) führt,
Das sich generell in der dritten Richtung (D3) erstreckt und folgendes umfasst:
- einen Körper (70) mit einer Basis (72), die sich generell in einer dritten Ebene (P3) rechtwinklig zur dritten Richtung (D3) erstreckt, zwei langgestreckten, nebeneinander liegenden Armen (73), die sich generell in der dritten Richtung (D3) erstrecken, gegenüber der Basis (72) eine gewisse elastische Verformbarkeit aufweisen und gegenüber der Basis (72) mit Verriegelungsvorsprüngen (74) versehen sind, und einem zentralen Durchgang (75), der sich generell in der dritten Richtung (D3) in der Basis (72) und zwischen den Armen (73) erstreckt,
- einen Schieber (71), der sich generell in der dritten Richtung (D3) erstreckt, mit einem zugänglichen Bewegungsbereich (76) in Richtung der Basis (72) des Körpers (70), und einem Betätigungsbereich (77) zwischen den Armen (73) des Körpers (70), der im zentralen Durchgang zwischen einer inaktiven ausgefahrenen Position und einer aktiven eingefahrenen Position, in der er zwischen den Armen (73) und den Verriegelungsvorsprüngen (74) so angeordnet ist (75), dass er sie auseinander bewegen und ihre Annäherung verhindern kann, gleitend montiert ist.
- Feststellmittel.

## Claims

1. An assembly (1) for - in the assembled state - the vibration filtering support of a functional element (2) - as being or comprising a fan, a heat exchanger, a condenser - on a rigid structural element (3) extended in a first substantially horizontal direction (D1) of the body of a machine - as an apparatus or a motor vehicle -, which comprises two similar assembly sets (4) spaced apart from each other along the structural element (3) and the lower part (5) of the functional element (2), each assembly (4) being such that:
- being part and integral with the structural element (3), a rigid sleeve (8) formed by a peripheral wall assembly (8a) having an inner face (19) and an outer face (20) and forming an inner hollow space (21) with an opening (22) located at one end, lies between an inner envelope and an outer envelope, each of general near-cylindrical shape, in first direction axis (D1), with a near-straight generating segment and a near-polygonal guide curve, and comprises a high wall (23) provided with an upper opening (24), having an outer upper face (25) and an inner upper face (26), extending in the first direction (D1) and in a second direction (D2) substantially horizontal and orthogonal to the first direction (D1);
- a support and vibration-filtering cassette (9) including:
∘ a rigid outer sheath (10) formed by a peripheral wall assembly (10a) having an inner face (32) and an outer face (33) and forming an inner hollow space:
• located between an inner envelope and an outer envelope, each of which is generally similar in shape to a cylinder, the outer envelope being complementary to the inner envelope of the sleeve (8) so as to allow the slidingly mounting and immobilization in position by contact,
• housed in the cavity and rigidly connected to the sleeve (8) by sliding in the first direction (D1) and end of stroke blocking members (46a),
• comprising a high wall (36) with an outer upper face (38) and an inner upper face (39), homologous to the upper wall (23) of the sleeve (8), provided with a high passage (37) homologous to the upper opening (24),
∘ an inner element (11), at least in part elastically deformable, housed in the hollow space and carried by the sheath (10):
• comprising a central core (12) which, in response to stresses in a third substantially vertical direction (D3), below a given limit, is moved into the hollow area away from the inner face (32) of the sheath (10), and including, on the one hand, elastically deformable parts (47), shaped outwards, capable of contributing to the filtering and, in response to stresses in the third direction (D3) exceeding said given limit, to come into abutment against the inner face (32) of the sheath (10), and, on the other hand, a cavity (48) with an upper opening (49) homologous to the upper passage (37),
• also including wings (15) for positioning, supporting, filtering and catching up dimensional dispersions between the functional element (2) and the structural element (3), in particular in the first direction (D1), located laterally on either side of the core (12) and extending to the sheath (10) to which they are rigidly associated, located along the first direction (D1), elastically deformable in the first (D1), second (D2) and third (D3) directions,
• the functional element (2) having in the lower part (5) a support face (6) and forming part with it a stud (7) projecting downwards in the third direction (D3), the weight of the functional element (2) being supported by the central core (12) of the inner element (11) via the support face (6) and a conjugated support face (60) associated with the central core (12), the fixed positioning of the functional element (2) with respect to the inner element (11) in the first direction (D1) and in the second direction (D2) being ensured by a fixed positioning means of the stud (7) in the cavity (48) of the inner element (11) where it is housed, while the stud (7) passes through the upper opening (24) and the upper passage (37).

2. Assembly (1) according to claim 1, in which the bearing face (6) and the positioning means appear as a belt-shaped extension insert(16), substantially rigid, extending along a third direction axis (D3), said insert (16) having an outer face (61) cooperating with the inner face (62) of the cavity (48), an inner face (63) defining a complementary hole (64) in which the stud (7) penetrates, and an upper edge forming a supporting face (60) conjugated to the supporting face (6) of the functional element (2), located higher than the upper outer face (25) of the upper wall (23) of the sleeve (8), the insert (16) and the inner element (11) being fixed to each other, additional means of fixing, such as pins or teeth (65), being provided on the insert (16) and the inner element (11), and wherein the extension insert (16) comprises a deformable trim (67) positioned on the upper edge forming seat, whereon rests the functional element (2), and/or a deformable trim (67) located on at least a part of the outer face (61) of the insert (16).

3. Assembly (1) according to one of claims 1 and 2, which also includes a locking part (17) of the stud (7) in the third direction (D3), preventing the stud (7) from disengaging from the cavity (48) of the inner member (11) where it is housed.

4. Assembly (1) according to claim 3, wherein the sleeve (8) comprises a low wall (27) provided with a lower opening (28), the sheath (10) comprises a low wall (40) provided with a low passage (41) matching the lower opening (28), the cavity (48) is open from side to side with an upper opening (49) and a lower opening (50), the stud (7) has lateral locking openings (69), and the locking piece (17), extending generally in the third direction (D3), has:
- a body (70) comprising a base (72) extending generally in a third plane (P3) orthogonal to the third direction (D3), two arms (73) elongated side by side extending generally in the third direction (D3) and having a certain elastic deformability opposite the base (72) and provided with locking protrusions (74) opposite the base (72), and a central passage (75) extending generally in the third direction (D3) provided in the base (72) and between the arms (73),
- a slide (71) extending generally in the third direction (D3), comprising an accessible manoeuvring part (76) towards the base (72) of the body (70), and an actuating part (77) between the arms (73) of the body (70) slidingly mounted in the central passage (75) between an inactive extended position and an active retracted position where it is arranged between the arms (73) and the locking protrusions (74), so as to spread them apart and prevent them from closing,
- means for immobilizing the locking part (17) on the insert (16) or the inner element (11) and means for holding the slide (71) in the body (70) in the active retracted position, so that the locking part (17) immobilizes the stud (7) of the functional element (2) on the insert (16) or the inner element (11) of the cassette (9) through the cooperation of the locking protrusions (74) in the locking openings (69).

5. Assembly (1) according to one of claims 1 to 4, wherein, seen in the third direction (D3), the upper opening (49) of the cavity (48) of the inner member (11) and the stud (7) have contours aligned with and of smaller dimensions than the contour of the upper passage (37) which itself has a contour aligned with and of smaller dimensions than the contour of the upper opening (24).

6. Assembly (1) according to one of claims 1 to 5, wherein, seen in the third direction (D3), the lower opening (50) of the cavity (48) of the inner element (11) has a contour located in alignment with and of smaller dimensions than the contour of the lower passage (41) which itself has a contour located in alignment with, and of smaller dimensions than, the contour of the lower opening (28).

7. Assembly (1) according to one of claims 1 to 6, wherein, seen in the third direction (D3), the upper opening (49) and lower opening (50) of the cavity (48) of the inner element (11) have identical or near-identical dimensions, the upper passage (37) and the lower passage (41) have identical or near-identical dimensions, the upper opening (24) and lower opening (28) have identical or near-identical dimensions.

8. Assembly (1) according to one of claims 1 to 7, wherein the upper opening (49), the lower opening (50) of the cavity (48) of the inner member (11) and the stud (7) have generally near-rectangular contours in the first (D1) and second (D2) directions, and/or the upper opening (24), the lower opening (28), the upper passage (37), the lower passage (41), the insert (16), also have generally near-rectangular contours in the first direction (D1) and the second direction (D2).

9. Support and vibration filtering cassette (9) being part of an assembly (1) according to one of claims 1 to 8 comprising two analogous assembly sets (4), spaced apart along the structural element (3) and the lower part (5) of the functional element (2) and the inner element:
- comprising a high wall (36) with an outer upper face (38) and an inner upper face (39), homologous to the upper wall (23) of the sleeve (8), provided with a high passage (37) homologous to the upper opening (24),
o an inner element (11), at least in part elastically deformable, housed in the hollow space and carried by the sheath (10):
- comprising a central core (12) which, in response to stresses in a third substantially vertical direction (D3), below a given limit, is moved into the hollow area away from the inner face (32) of the sheath (10), and including, on the one hand, elastically deformable parts (47), shaped outwards, capable of contributing to the filtering and, in response to stresses in the third direction (D3) exceeding said given limit, to come into abutment against the inner face (32) of the sheath (10), and, on the other hand, a cavity (48) with an upper opening (49) homologous to the upper passage (37), also comprising wings (15) for the positioning, support, filtering and catching up dimensional dispersions between the functional element (2) and the structural element (3), in particular in the first direction (D1), located laterally on either side of the core (12) and extending to the sheath (10) to which they are rigidly associated, located along the first direction (D1), elastically deformable in the first (D1), second (D2) and third (D3) directions,
- the functional element (2) having in the lower part (5) a support face (6) and integral with it a stud (7) projecting downwards in the third direction (D3), the weight of the functional element (2) being supported by the central core (12) of the inner element (11) via the support face (6) and a conjugated support face (60) associated with the central core (12), the fixed positioning of the functional element (2) with respect to the inner element (11) in the first direction (D1) and in the second direction (D2) being ensured by a fixed positioning means of the stud (7) in the cavity (48) of the inner element (11) where it is housed, while the stud (7) passes through the upper opening (24) and the upper passage (37),
including:
- a rigid outer sheath (10) formed by a peripheral wall assembly (10a) having an inner face (32) and an outer face (33) and forming an inner hollow area, lying between an inner envelope and an outer envelope, each of general near-cylindrical shape, and comprising an upper wall (36) with an outer upper face (38) and an inner upper face (39), an inner element (11), at least partly elastically deformable, housed in the hollow area and carried by the sheath (10):
∘ including a central core (12) which, in response to stresses in the third direction (D3) below a given limit, is moved into the hollow area away from the inner face (32) of the sheath (10), and which includes, on the one hand, elastically deformable parts (47), shaped outwards, capable of contributing to the filtering and, in response to stresses in the third direction (D3) exceeding said given limit, come to a stop, and, on the other hand, a cavity (48) with an upper opening (49),
∘ also including wings (15) for positioning, supporting, filtering and catching up dimensional dispersions between the functional element (2) and the structural element (3), in particular in the first direction (D1), located laterally on either side of the core (12) and extending to the sheath (10) to which they are rigidly associated, located along the first direction (D1), elastically deformable in the first (D1), second (D2) and third (D3) directions.

10. Support and vibration filtering cassette (9) according to claim 9, wherein the outer sheath (10) comprises on its outer face (33) localised protrusions, shaped outwards, in particular localised protrusions extending in the first direction (D1), mounted slidingly with adjustment of the cassette (9) with respect to the sheath (8) of the structural element (3), and wherein the outer sheath (10) comprises end-of-stroke blocking means (46a), in the first direction (D1), with respect to the sheath (8) of the structural element (3), shaped as localised protrusions, protruding outward from the outer face (33), generally located in a first plane (P1) orthogonal to the first direction (D1).

11. Support and vibration filtering cassette (9) according to one of claims 9 and 10, wherein the central core (12) of the inner member (11) comprises:
a rigid core (13) having:
∘ a hollow central part (55) so as to form and limit the cavity (48) of the inner element (11) and its upper opening (49), and
∘ two wings (15) arranged on either side of the hollow central space (55) and extending in the first direction (D1), having two end faces,
an elastically deformable peripheral trim (14), comprising the elastically deformable parts (47) shaped outwards, covering the rigid core (13), with the exception of at least part of its end faces.

12. Support and vibration-filtering cassette (9) according to one of claims 9 to 11, wherein the wings (15) for positioning, supporting, filtering and catching up dimensional dispersions of the inner element (11) are adjacent to the lateral faces (51) of the core (12) and either extend so as to have a substantial orthogonal projection on a third plane (P3) orthogonal to the third direction (D3) or extend in a plane tilted with respect to the third plane (P3) so as to be rigidly associated with the two lateral walls (44) of the sheath (10).

13. Support and vibration-filtering cassette (9) according to one of claims 9 to 12, wherein, seen in the third direction (D3), the upper opening (49) of the cavity (48) of the inner member (11) has a contour aligned with and of smaller dimensions than the contour of the upper passage (37) and/or the lower opening (50) of the cavity (48) has a contour aligned with and of smaller dimensions than the contour of the lower passage (41).

14. Insert (16) being part of an assembly (1) according to one of claims 1 to 8, said assembly comprising two analogous assembly sets (4), spaced apart along the structural element (3) and the lower part (5) of the functional element (2) and the inner element:
- comprising a high wall (36) with an outer upper face (38) and an inner upper face (39), homologous to the upper wall (23) of the sleeve (8), provided with a high passage (37) homologous to the upper opening (24),
∘ an inner element (11), at least in part elastically deformable, housed in the hollow space and carried by the sheath (10):
- comprising a central core (12) which, in response to stresses in a third substantially vertical direction (D3), below a given limit, is moved into the hollow area away from the inner face (32) of the sheath (10), and including, on the one hand, elastically deformable parts (47), shaped outwards, capable of contributing to the filtering and, in response to stresses in the third direction (D3) exceeding said given limit, to come into abutment against the inner face (32) of the sheath (10), and, on the other hand, a cavity (48) with an upper opening (49) homologous to the upper passage (37),
- also including wings (15) for positioning, supporting, filtering and catching up dimensional dispersions between the functional element (2) and the structural element (3), in particular in the first direction (D1), located laterally on either side of the core (12) and extending to the sheath (10) to which they are rigidly associated, located along the first direction (D1), elastically deformable in the first (D1), second (D2) and third (D3) directions,
- the functional element (2) having in the lower part (5) a support face (6) and integral with it a stud (7) projecting downwards in the third direction (D3), the weight of the functional element (2) being supported by the central core (12) of the inner element (11) via the support face (6) and a conjugated support face (60) associated with the central core (12), the fixed positioning of the functional element (2) with respect to the inner element (11) in the first direction (D1) and in the second direction (D2) being ensured by a fixed positioning means of the stud (7) in the cavity (48) of the inner element (11) where it is housed, while the stud (7) passes through the upper opening (24) and the upper passage (37),
such as, belt-shaped, substantially rigid, extending along a third direction axis (D3), having an outer face (61), an inner face (62) defining a hole (64), an upper edge forming a supporting face (60) conjugated to the supporting face (60), and immobilization means, such as pins or teeth (65), and comprises a deformable trim (67) positioned on the upper edge forming seat and/or a deformable trim (67) positioned on at least a part of its outer face (61).

15. Locking member (17) being part of an assembly (1) according to one of claims 1 to 8, said assembly comprising two analogous assembly sets (4), spaced apart along the structural element (3) and the lower part (5) of the functional element (2) and the inner element:
- comprising a high wall (36) with an outer upper face (38) and an inner upper face (39), homologous to the upper wall (23) of the sleeve (8), provided with a high passage (37) homologous to the upper opening (24),
o an inner element (11), at least in part elastically deformable, housed in the hollow space and carried by the sheath (10):
- comprising a central core (12) which, in response to stresses in a third substantially vertical direction (D3), below a given limit, is moved into the hollow area away from the inner face (32) of the sheath (10), and including, on the one hand, elastically deformable parts (47), shaped outwards, capable of contributing to the filtering and, in response to stresses in the third direction (D3) exceeding said given limit, to come into abutment against the inner face (32) of the sheath (10), and, on the other hand, a cavity (48) with an upper opening (49) homologous to the upper passage (37), also comprising wings (15) for the positioning, support, filtering and catching up dimensional dispersions between the functional element (2) and the structural element (3), in particular in the first direction (D1), located laterally on either side of the core (12) and extending to the sheath (10) to which they are rigidly associated, located along the first direction (D1), elastically deformable in the first (D1), second (D2) and third (D3) directions,
- the functional element (2) having in the lower part (5) a support face (6) and integral with it a stud (7) projecting downwards in the third direction (D3), the weight of the functional element (2) being supported by the central core (12) of the inner element (11) via the support face (6) and a conjugated support face (60) associated with the central core (12), the fixed positioning of the functional element (2) with respect to the inner element (11) in the first direction (D1) and in the second direction (D2) being ensured by a fixed positioning means of the stud (7) in the cavity (48) of the inner element (11) where it is housed, while the stud (7) passes through the upper opening (24) and the upper passage (37),
which extends generally in the third direction (D3) and comprises:
- a body (70) comprising a base (72) extending generally in a third plane (P3) orthogonal to the third direction (D3), two arms (73) elongated side by side extending generally in the third direction (D3) and having a certain elastic deformability opposite the base (72) and provided with locking protrusions (74) opposite the base (72), and a central passage (75) extending generally in the third direction (D3) provided in the base (72) and between the arms (73),
- a slide (71) extending generally in the third direction (D3), comprising an accessible manoeuvring part (76) towards the base (72) of the body (70), and an actuating part (77) between the arms (73) of the body (70) slidingly mounted in the central passage (75) between an inactive extended position and an active retracted position where it is arranged between the arms (73) and the locking protrusions (74), so as to spread them apart and prevent them from closing,
- immobilization means.
